# EUROPEAN PATENT SPECIFICATION

(11) **EP 3 899 071 B1**
(45) Date of publication and mention of the grant of the patent: **30.04.2025**
(21) Application number: 19900677.6
(22) Date of filing: 03.12.2019
(51) Int. Cl.: C22B 3/26, C22B 7/00, C22B 3/00, C22B 26/12

(54) **BATTERY RECYCLING PROCESS**
BATTERIERECYCLINGVERFAHREN
PROCÉDÉ DE RECYCLAGE DE BATTERIES

(30) Priority: 21.12.2018 AU 2018904918; 06.03.2019 EP 19161012
(43) Date of publication of application: 27.10.2021
(73) Proprietor: A.C.N. 630 589 507 PTY LTD, West Perth, Western Australia 6005 (AU)
(72) Inventor: BEER, Gavin, WOODLANDS, Western Australia 6018 (AU); URBANI, Mark Daniel, WATTLE GROVE, Western Australia 6107 (AU)
(74) Representative: HGF
(86) International application number: PCT/AU2019/051318
(87) International publication number: WO 2020/124130

(56) References cited:
- EP-A1- 3 202 928
- EP-A1- 3 202 929
- WO-A1-2017/145099
- WO-A1-2017/159745
- WO-A1-2018/218358
- XU ET AL: "A review of processes and technologies for the recycling of lithium-ion secondary batteries", JOURNAL OF POWER SOURCES, ELSEVIER SA, CH, vol. 177, no. 2, 14 January 2008 (2008-01-14), pages 512 - 527, XP022450299, ISSN: 0378-7753, DOI: 10.1016/J.JPOWSOUR.2007.11.074
- PRANOLO Y ET AL: "Recovery of metals from spent lithium-ion battery leach solutions with a mixed solvent extractant system", HYDROMETALLURGY, ELSEVIER SCIENTIFIC PUBLISHING CY. AMSTERDAM, NL, vol. 102, no. 1-4, 1 April 2010 (2010-04-01), pages 37 - 42, XP026977212, ISSN: 0304-386X, [retrieved on 20100201]
- J.M. ZHAO ET AL: "Synergistic extraction and separation of valuable metals from waste cathodic material of lithium ion batteries using Cyanex272 and PC-88A", SEPARATION AND PURIFICATION TECHNOLOGY, vol. 78, no. 3, 1 April 2011 (2011-04-01), pages 345 - 351, XP055013869, ISSN: 1383-5866, DOI: 10.1016/j.seppur.2010.12.024
- WEI-SHENG CHEN , HSING-JUNG HO: "Recovery of Valuable Metals from Lithium-Ion Batteries NMC Cathode Waste Materials by Hydrometallurgical Methods", METALS, vol. 8, no. 5, 321, 6 May 2018 (2018-05-06), pages 1 - 16, XP055721704, DOI: 10.3390/met8050321

## Description

### TECHNICAL FIELD

The present invention relates to a method for the recovery of metals from feed materials containing such metals. More specifically, the present invention relates to the recovery of various metals contained in spent lithium-based (Li-ion) batteries.

### BACKGROUND ART

The following discussion of the background art is intended to facilitate an understanding of the present invention only. The discussion is not an acknowledgement or admission that any of the material referred to is or was part of the common general knowledge as at the priority date of the application.

The volume of rechargeable Li-ion batteries used worldwide has been growing rapidly in recent years and is set for further expansion with the emerging markets of electric vehicles and mass electric power storage. As the demand for Li-ion batteries increases, so does the demand for the metal / metal oxide components that are used in the batteries. The rapid increase in demand for some of these metals, such as cobalt, has put pressure on the sustainable supply of such resources. This has caused the cost of such metals to rapidly increase.

There has been little interest in developing processes for the recovery and recycling of the various components in modern batteries. This is mainly due to the relatively low volume of Li-ion batteries available for recycling and the relatively high cost of the typical pyro- and hydro-metallurgical processes by which the recovery is achieved. As the demand for Li-ion batteries continues to increase, so too does the volume of spent Li-ion batteries that are available for recycling. There is a need for low-cost, efficient recycling processes, particularly for the more complex metal/metal oxide components.

The composition of Li-ion batteries has evolved considerably over recent times. Whilst some battery recycling processes have been developed, these have primarily been limited to the recovery of certain metals from a certain type of battery or feed source. For example, early batteries were predominantly lithium-cobalt and the focus of the recovery methods was on the recovering cobalt. As lithium demand increased, the recovery methods shifted to the recovery of both cobalt and lithium. As battery technologies further developments, the cathodes incorporated other metals, such as manganese, nickel, aluminium, iron and phosphorus. The methods used to recovery lithium and cobalt are not suited for the recovery of other metals, nor are they well suited for different battery chemistries.

The uptake in the usage of Li-ion batteries will increase the volume of spent Li-ion batteries available for recycling. However, the supply of spent Li-ion batteries will include many different types of batteries. The suitability of recovery methods to only a single battery type presents a significant problem to the commercialisation of such processes as it will require sorting and separation. There is a need for the development of a process for the recovery of a range of metals from a range of different Li-ion battery types.

EP 3 202 929 A1 discloses a method for leaching scrap of a lithium ion battery containing nickel and/or cobalt in an acidic solution, in which the leaching of nickel and/or cobalt can be effectively promoted by adding, together with the scrap, at least one of simple substances of manganese and/or iron, compounds of manganese and/or iron and a solution containing metal ions of manganese and/or iron which are not contained in the scrap, to the acidic solution so that the metal ions of manganese and/or iron are present in the acidic solution, and then contacting nickel and/or cobalt contained in the scrap with the metal ions of manganese and/or iron in the acidic solution containing the metal ions of manganese and/or iron.

EP 3 202 928 A1 discloses a method for leaching the scrap of the lithium ion battery containing nickel and/or cobalt and manganese and/or iron in an acidic solution, the method comprising a metal leaching step of leaching nickel and/or cobalt by adding the scrap to the acidic solution, so that manganese and/or iron is first leached to allow metal ions of manganese and/or iron to be present in the acidic solution, and then contacting nickel and/or cobalt with the metal ions of manganese and/or iron in the acidic solution containing the metal ions of manganese and/or iron.

XU ET AL, "A review of processes and technologies for the recycling of lithium-ion secondary batteries", JOURNAL OF POWER SOURCES, ELSEVIER SA, vol. 177, no. 2, refers to several processes for the recycling of lithium ion batteries that include the leaching of the batteries in an acidic solution, followed by the use of solvent extraction to recover one or more metals from the resulting leach solution.

It is against this background that the present invention has been developed.

The present invention seeks to overcome, or at least ameliorate, one or more of the deficiencies of the prior art mentioned above, or to provide the consumer with a useful or commercial choice.

Throughout this specification, unless the context requires otherwise, the word "comprise" or variations such as "comprises" or "comprising", will be understood to imply the inclusion of a stated integer or group of integers but not the exclusion of any other integer or group of integers.

### SUMMARY OF INVENTION

In accordance with a first aspect of the present invention, there is provided a method for the recovery of metals from a feed stream containing one or more value metals and lithium, the method comprising:
subjecting the feed stream to a sulphuric acid leach to form a slurry comprising a pregnant leach solution of soluble metal salts and a solid residue;
separating the pregnant leach solution and the solid residue;
subjecting the pregnant leach solution to one or more separate solvent extraction steps, wherein each solvent extraction step recovers one or more value metals from the pregnant leach solution, the remaining pregnant leach solution comprising lithium; and
recovery of lithium from the pregnant leach solution.

The method of the present invention is particularly useful for the recovery of at least a significant portion of all the value metals from spent Li-ion batteries, preferably as high purity sulphates. The process is particularly robust in that it can accommodate a variety of Li-ion battery chemistries as a single or mixed feed source. This is achieved by way of an acidic leach, followed by sequential metal recovery steps using solvent extraction techniques. This has been found to particularly advantageous as the process can handle a number of different battery chemistries, meaning there is no sorting of different battery types required.

**In** preferred forms of the present invention, the feed stream comprises one or more of copper, iron, manganese, aluminium, cobalt and nickel.

**In** one embodiment of the present invention, the method further comprises the step of:
subjecting the feed stream to a pretreatment process,
prior to the step of subjecting the feed stream to a sulphuric acid leach.

Preferably, the pre-treatment process comprises one or more mechanical treatment steps. More preferably, the mechanical treatment steps comprises one or more of a crushing step and a shredding step.

Preferably, the pre-treatment process comprises one or more size reduction steps. More preferably, the one or more size reduction steps comprise a grinding step.

**In** one form of the present invention, the pre-treatment process comprises one or more beneficiation steps. Preferably, the one or more beneficiation steps include one or more of an air classification step, a magnetic classification step and a floatation step.

**In** one form of the present invention, the steps of:
subjecting the feed stream to a sulphuric acid leach to form a slurry comprising a pregnant leach solution of soluble metal salts and a solid residue; and
separating the pregnant leach solution and the solid residue,
are undertaken in a leach circuit. Preferably, the leach circuit comprises a leach section, a thickener section and a filter section.

In one form of the present invention, the step of:
subjecting the feed stream to a sulphuric acid leach to form a slurry comprising a pregnant leach solution of soluble metal salts and a solid residue,
more specifically comprises subjecting the feed stream to a sulphuric acid leach in one or more leach reactors. Preferably, the step comprises subjecting the feed stream to a sulphuric acid leach in two or more leach reactors. More preferably, the step comprises subjecting the feed stream to a sulphuric acid leach in three or more leach reactors. More preferably, the step comprises subjecting the feed stream to a sulphuric acid leach in four or more leach reactors. More preferably, the step comprises subjecting the feed stream to a sulphuric acid leach in five or more leach reactors.

Preferably, the step of subjecting the feed stream to a sulphuric acid leach is conducted at atmospheric pressure.

Preferably, the step of subjecting the feed stream to a sulphuric acid leach is conducted at elevated temperature.

In one form of the present invention, each solvent extraction step comprises the contact of the pregnant leach solution with an extractant to extract one or more metals to produce a loaded extractant containing the one or more extracted metals. Preferably, each solvent extraction step further comprises the separation of the loaded extractant from the pregnant leach solution. More preferably, each solvent extraction step further comprises the recovery of the metal from the loaded extractant.

In one form of the present invention, one of the separate solvent extraction steps is adapted to recover copper from the pregnant leach solution. Preferably, the pregnant leach solution is contacted with a copper extractant to produce a copper depleted pregnant leach solution and loaded copper extractant. More preferably, copper is recovered from the loaded copper extractant. Still preferably, copper is recovered as a sulfate.

In one form of the present invention, one of the separate solvent extraction steps is adapted to recover aluminium from the pregnant leach solution. Preferably, the pregnant leach solution is contacted with an aluminium extractant to produce an aluminium depleted pregnant leach solution and loaded aluminium extractant. More preferably, aluminium is recovered from the loaded aluminium extractant. In one form of the present invention, aluminium is recovered from the pregnant leach solution following the recovery of copper.

In one form of the present invention, the contact of the pregnant leach solution with an aluminium extractant will further load iron from the pregnant leach solution onto the loaded aluminium extractant. Preferably, iron is recovered from the loaded aluminium extractant.

Aluminium and iron are recovered from the pregnant leach solution by way of a precipitation step. Preferably, aluminium and iron are recovered as a mixed hydroxide precipitate. More preferably, the precipitation step further comprises the separation of the precipitated solids from the pregnant leach solution.

In one form of the present invention, the precipitation step comprises the addition of an oxidising agent. Preferably the oxidising agent is selected from air, oxygen gas, oxygen enriched gases and hydrogen peroxide.

The precipitation step comprises increasing the pH of the pregnant leach solution to above 4.5. The pH is increased by the addition of ammonia. In one form of the present invention, the precipitation step comprises two or more precipitation stages operating at increasing pH. Preferably, at least one precipitation stage is operated at a pH of 3.2 to 4 and at least one precipitation stage is operated at a pH above 4.5. More preferably, an oxidising agent is added to one or both precipitation stages.

In one form of the present invention, one of the separate solvent extraction steps is adapted to recover manganese from the pregnant leach solution. Preferably, the pregnant leach solution is contacted with a manganese extractant to produce a manganese depleted pregnant leach solution and loaded manganese extractant. More preferably, manganese is recovered from the loaded manganese extractant. Still preferably, manganese is recovered as a sulfate. In one form of the present invention, manganese is recovered from the pregnant leach solution following the recovery of aluminium and/or iron.

In one form of the present invention, one of the separate solvent extraction steps is adapted to recover cobalt from the pregnant leach solution. Preferably, the pregnant leach solution is contacted with a cobalt extractant to produce a cobalt depleted pregnant leach solution and loaded cobalt extractant. More preferably, cobalt is recovered from the loaded cobalt extractant. Still preferably, cobalt is recovered as a sulfate. In one form of the present invention, cobalt is recovered from the pregnant leach solution following the recovery of manganese.

In one form of the present invention, one of the separate solvent extraction steps is adapted to recover cobalt and manganese from the pregnant leach solution. It is envisaged by the inventors that in this form of the invention, cobalt and manganese will be simultaneously extracted from the pregnant leach solution using a single extractant. Preferably, the pregnant leach solution is contacted with a Co-Mn extractant to produce a cobalt and manganese depleted pregnant leach solution and loaded Co-Mn extractant. More preferably, cobalt and manganese are recovered from the loaded Co-Mn extractant. Still preferably, manganese and cobalt are recovered as a sulfate. In one form of the present invention, cobalt and manganese are recovered from the pregnant leach solution following the recovery of aluminium and/or iron.

In one form of the present invention, one of the separate solvent extraction steps is adapted to recover nickel from the pregnant leach solution. Preferably, the pregnant leach solution is contacted with a nickel extractant to produce a nickel depleted pregnant leach solution and loaded nickel extractant. More preferably, nickel is recovered from the loaded nickel extractant. Still preferably, nickel is recovered as a sulfate. In one form of the present invention, nickel is recovered from the pregnant leach solution following the recovery of manganese and/or cobalt.

In one form of the present invention, the separate solvent extraction steps are performed sequentially. Preferably, the separate solvent extractions step are performed in the sequence: copper, aluminium, manganese, cobalt and nickel. Where manganese and cobalt are co-extracted, the separate solvent extractions step are performed in the sequence: copper, aluminium, manganese/cobalt and nickel.

In one form of the present invention, following the one or more separate solvent extraction steps, the pregnant leach solution comprises lithium.

In one form of the present invention, the recovery of lithium from the pregnant leach solution more specifically comprises the precipitation of a lithium compound. More preferably, the lithium compound is subsequently recovered from the solution. In one embodiment, the lithium compound is lithium carbonate. Preferably, the pregnant leach solution is contacted with ammonium carbonate to precipitate lithium carbonate. Alternatively, the pregnant leach solution is contacted with sodium carbonate to precipitate lithium carbonate.

In an alternative form of the present invention, lithium compounds are precipitated by means of crystallisation. Preferably, lithium sulphate is crystallised from solution by way of evaporation.

In one form of the present invention, the recovery of lithium from the pregnant leach solution more specifically comprises the recovery of lithium using solvent extraction.

In one form of the present invention, the recovery of lithium from the pregnant leach solution more specifically comprises the recovery of lithium using ion exchange.

In one form of the present invention, the recovery of lithium from the pregnant leach solution more specifically comprises the use of an electrolysis step. Preferably, the electrolysis step produces a solution of LiOH.

Following the step of lithium recovery, the leach solution is subjected to an ammonium sulphate recovery step. Preferably, the ammonium sulphate recovery step comprises an ammonium sulfate crystallisation step.

In accordance with a further aspect of the present invention, there is provided a method for the recovery of metals from a feed stream containing one or more value metals and lithium, the method comprising:
subjecting the feed stream to a sulphuric acid leach to form a slurry comprising a pregnant leach solution of soluble metal salts and a solid residue;
separating the pregnant leach solution and the solid residue;
subjecting the pregnant leach solution to a solvent extraction step adapted to recover copper from the pregnant leach solution;
subjecting the pregnant leach solution to a solvent extraction step adapted to recover aluminium from the pregnant leach solution;
subjecting the pregnant leach solution to a solvent extraction step adapted to recover manganese from the pregnant leach solution;
subjecting the pregnant leach solution to a solvent extraction step adapted to recover cobalt from the pregnant leach solution;
subjecting the pregnant leach solution to a solvent extraction step adapted to recover nickel from the pregnant leach solution; and
recovery of lithium from the pregnant leach solution.

Preferably, iron is also recovered in the solvent extraction step adapted to recover aluminium from the pregnant leach solution.

Preferably, each solvent extraction step comprises the contact of the pregnant leach solution with an extractant to extract one or more metals to produce a loaded extractant containing the one or more extracted metals. More preferably, each solvent extraction step further comprises the separation of the loaded extractant from the pregnant leach solution. Still preferably, each solvent extraction step further comprises the recovery of the metal from the loaded extractant.

In accordance with a further aspect of the present invention, there is provided a method for the recovery of metals from a feed stream containing one or more value metals and lithium, the method comprising:
subjecting the feed stream to a sulphuric acid leach to form a slurry comprising a pregnant leach solution of soluble metal salts and a solid residue;
separating the pregnant leach solution and the solid residue;
subjecting the pregnant leach solution to a solvent extraction step adapted to recover copper from the pregnant leach solution;
subjecting the pregnant leach solution to a solvent extraction step adapted to recover aluminium from the pregnant leach solution;
subjecting the pregnant leach solution to a solvent extraction step adapted to recover manganese and cobalt from the pregnant leach solution;
subjecting the pregnant leach solution to a solvent extraction step adapted to recover nickel from the pregnant leach solution; and
recovery of lithium from the pregnant leach solution.

Preferably, iron is also recovered in the solvent extraction step adapted to recover aluminium from the pregnant leach solution.

Preferably, each solvent extraction step comprises the contact of the pregnant leach solution with an extractant to extract one or more metals to produce a loaded extractant containing the one or more extracted metals. More preferably, each solvent extraction step further comprises the separation of the loaded extractant from the pregnant leach solution. Still preferably, each solvent extraction step further comprises the recovery of the metal from the loaded extractant.

Preferably, the product of the solvent extraction step adapted to recover manganese and cobalt from the pregnant leach solution is subjected to a process to separately recover manganese and cobalt. More preferably, the product of the solvent extraction step adapted to recover manganese and cobalt from the pregnant leach solution is subjected to a solvent extraction step adapted to recover manganese. Still preferably, cobalt is recovered from the raffinate of the solvent extraction step adapted to recover manganese.

In accordance with a further aspect of the present invention, there is provided a method for the recovery of metals from a feed stream containing one or more value metals and lithium, the method comprising:
subjecting the feed stream to a sulphuric acid leach to form a slurry comprising a pregnant leach solution of soluble metal salts and a solid residue;
separating the pregnant leach solution and the solid residue;
subjecting the pregnant leach solution to a solvent extraction step adapted to recover copper from the pregnant leach solution;
subjecting the pregnant leach solution to a precipitation step adapted to recover aluminium from the pregnant leach solution;
subjecting the pregnant leach solution to a solvent extraction step adapted to recover manganese from the pregnant leach solution;
subjecting the pregnant leach solution to a solvent extraction step adapted to recover cobalt from the pregnant leach solution;
subjecting the pregnant leach solution to a solvent extraction step adapted to recover nickel from the pregnant leach solution; and
recovery of lithium from the pregnant leach solution.

Preferably, the precipitation step adapted to recover aluminium from the pregnant leach solution will also recover iron from pregnant leach solution.

Preferably, each solvent extraction step comprises the contact of the pregnant leach solution with an extractant to extract one or more metals to produce a loaded extractant containing the one or more extracted metals. More preferably, each solvent extraction step further comprises the separation of the loaded extractant from the pregnant leach solution. Still preferably, each solvent extraction step further comprises the recovery of the metal from the loaded extractant.

In accordance with a further aspect of the present invention, there is provided a method for the recovery of metals from a feed stream containing one or more value metals and lithium, the method comprising:
subjecting the feed stream to a sulphuric acid leach to form a slurry comprising a pregnant leach solution of soluble metal salts and a solid residue;
separating the pregnant leach solution and the solid residue;
subjecting the pregnant leach solution to a solvent extraction step adapted to recover copper from the pregnant leach solution;
subjecting the pregnant leach solution to a precipitation step adapted to recover aluminium from the pregnant leach solution;
subjecting the pregnant leach solution to a solvent extraction step adapted to recover manganese and cobalt from the pregnant leach solution;
subjecting the pregnant leach solution to a solvent extraction step adapted to recover nickel from the pregnant leach solution; and
recovery of lithium from the pregnant leach solution.

Preferably, the precipitation step adapted to recover aluminium from the pregnant leach solution will also recover iron from pregnant leach solution.

Preferably, each solvent extraction step comprises the contact of the pregnant leach solution with an extractant to extract one or more metals to produce a loaded extractant containing the one or more extracted metals. More preferably, each solvent extraction step further comprises the separation of the loaded extractant from the pregnant leach solution. Still preferably, each solvent extraction step further comprises the recovery of the metal from the loaded extractant.

Preferably, the product of the solvent extraction step adapted to recover manganese and cobalt from the pregnant leach solution is subjected to a process to separately recover manganese and cobalt. More preferably, the product of the solvent extraction step adapted to recover manganese and cobalt from the pregnant leach solution is subjected to a solvent extraction step adapted to recover manganese. Still preferably, cobalt is recovered from the raffinate of the solvent extraction step adapted to recover manganese.

### BRIEF DESCRIPTION OF THE DRAWINGS

Further features of the present invention are more fully described in the following description of several non-limiting embodiments thereof. This description is included solely for the purposes of exemplifying the present invention. It should not be understood as a restriction on the broad summary, disclosure or description of the invention as set out above. The description will be made with reference to the accompanying drawings in which:
Figure 1 is a flow sheet of the method of the present invention;
Figure 2 is a flow sheet of leaching circuit;
Figure 3 is flow sheet of the copper solvent extraction circuit;
Figure 4 is flow sheet of the aluminium solvent extraction circuit;
Figure 4a is a flow sheet of an alternative aluminium extraction circuit;
Figure 5 is flow sheet of the cobalt / manganese recovery circuit;
Figure 6 is a flow sheet of the Co-Mn solvent extraction circuit;
Figure 7 is flow sheet of the manganese solvent extraction circuit;
Figure 7a is a flow sheet of an alternative manganese and cobalt solvent extraction circuit;
Figure 8 is flow sheet of the nickel solvent extraction circuit;
Figure 9 is flow sheet of the lithium recovery circuit;
Figure 10 is flow sheet of the ammonium sulfate recovery circuit;
Figure 11 is a graph showing an extraction distribution isotherm for copper;
Figure 12 is a graph showing copper sulfate crystallization;
Figure 13 is a graph showing copper sulfate crystallization;
Figure 14 is a graph showing the effect of pH on the precipitation of metals at 45°C;
Figure 15 is a graph showing the effect of pH on the precipitation of metals at 65°C;
Figure 16 is a graph showing the effect of pH on the precipitation of metals at 90°C;
Figure 17 is a graph showing the effect of temperature on the separation of aluminium from cobalt;
Figure 18 is a graph showing the effect of temperature on the separation of aluminium from nickel;
Figure 19 is a graph showing a pH isotherm with 15% (v/v) D2EHPA at an O/A ratio of 1:1;
Figure 20 is a graph showing pH isotherm with 30% (v/v) Cyanex 272 at an O/A ratio of 3:1;
Figure 21 is a graph showing an extraction distribution isotherm for cobalt with 30% (v/v) Cyanex 272 at pH 4.80;
Figure 22 is a graph showing an extraction distribution isotherm for manganese with 30% (v/v) Cyanex 272 at pH 4.80;
Figure 23 is a pH isotherm with 10% (v/v) LIX84I at an O/A ratio of 1:1; and
Figure 24 is a graph showing copper in the raffinate and extraction for the campaign duration.

### DESCRIPTION OF EMBODIMENTS

As described above, in one aspect of the invention, there is provided a method for the recovery of metals from a feed stream containing one or more value metals and lithium, the method comprising:
subjecting the feed stream to a sulphuric acid leach to form a slurry comprising a pregnant leach solution of soluble metal salts and a solid residue;
separating the pregnant leach solution and the solid residue;
subjecting the pregnant leach solution to one or more separate solvent extraction steps, wherein each solvent extraction step comprises the contact of the pregnant leach solution with an extractant to extract one or more metals, the separation of the loaded extractant from the pregnant leach solution and the recovery of the metal from the loaded extractant; and
recovery of lithium from the pregnant leach solution.

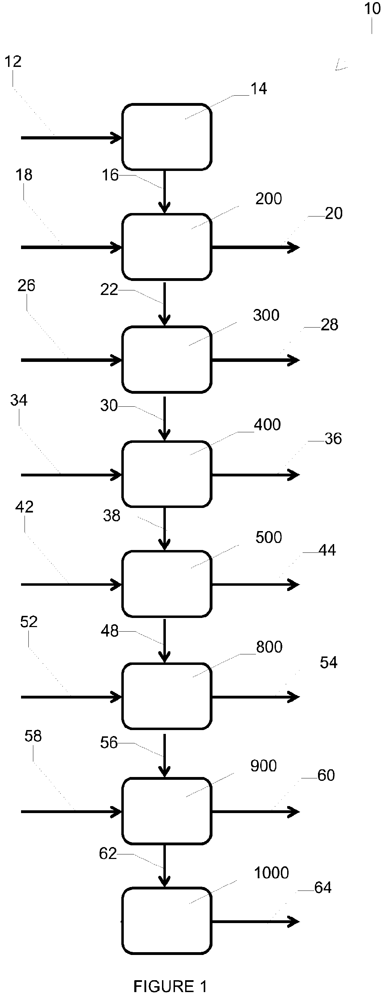

In Figure 1, there is shown a method for the recovery of metals 10 in accordance with an embodiment of the present invention. In this embodiment, a feed stream 12 is subjected to a pre-treatment process 14 to render the feed stream suitable for further processing. The resulting feed stream 16 is then passed to a leaching circuit 200 where it is contacted with sulphuric acid 18 to solubilise metal species. Undissolved solids 20 are removed from the leach solution to provide a pregnant leach solution 22.

The pregnant leach solution 22 is directed to a copper solvent extraction circuit 300 where it is contacted with a copper extractant 26. Copper is loaded onto the copper extractant and the loaded extractant 28 is separated from the pregnant leach solution 22. Copper product is subsequently recovered from the copper extractant.

The copper depleted pregnant leach solution 30 is directed to an aluminium solvent extraction circuit 400 where it is contacted with an aluminium extractant 34. Aluminium is loaded onto the aluminium extractant and the loaded extractant 36 is separated from the pregnant leach solution 30. Aluminium product is subsequently recovered from the aluminium extractant.

The aluminium depleted pregnant leach solution 38 is directed to a cobalt / manganese recovery circuit 500 where it is contacted with a Co-Mn extractant 42. Cobalt and manganese are loaded onto the Co-Mn extractant and the loaded extractant 44 is separated from the pregnant leach solution 38. Cobalt product and manganese product are subsequently recovered from the Co-Mn extractant.

The cobalt / manganese depleted pregnant leach solution 48 is directed to a nickel solvent extraction circuit 800 where it is contacted with a nickel extractant 52. Nickel is loaded onto the nickel extractant and the loaded extractant 54 is separated from the pregnant leach solution 48. Nickel product is subsequently recovered from the nickel extractant.

The resulting pregnant leach solution 56 is directed towards a lithium recovery circuit 900 where it is contact with ammonium carbonate 58 to precipitate lithium carbonate. Lithium carbonate product 60 is recovered from the solution. The resulting filtrate 62, which contains ammonia, is passed to an ammonium sulfate recovery circuit 1000 to produce an ammonium sulfate product 64.

A more detailed description of each of the above discussed circuits is provided as follows.

### Feed Material

In one embodiment of the present invention, the feed material comprises Li-ion batteries. The process of the present invention is adapted to treat a range of different battery types and recover a range of value metals. Throughout this specification, unless the context requires otherwise, the term "Li-ion battery", will be understood to refer to any battery that comprises lithium or lithium compounds. The term will also be understood to include any components from such batteries or waste products from the production of such batteries.

In one embodiment, the feed stream comprises battery cathode and anode materials which contain lithium and one or more of cobalt, copper, manganese, nickel, aluminium and iron.

### Pre-treatment Process

The target value metals in Li-ion batteries are contained within the cathode and anode. Commercial batteries typically comprise the cathode and anode contained within a casing. In some instances a plastic covering is also wrapped around the casing. As no value metals are contained within the casing and covering, it is preferred that these should be removed prior to the step of subjecting the feed stream to a sulphuric acid leach.

In one embodiment of the present invention, the feed material is subjected to a mechanical treatment step. Preferably, the mechanical treatment step comprises a crushing and/or shredding step. It has been found by the inventors that the mechanical treatment of spent Li-ion batteries will release the anode and cathode materials from within the casings of the Li-ion batteries.

In one embodiment of the present invention, the feed materials are subjected to a size reduction step. Preferably, the size reduction step comprises a grinding or milling step. The inventors have found that the reduction of the particle size is beneficial for the subsequent acid leach steps.

In one form of the present invention, the average particle size of the feed material is reduced to below 5 mm. Preferably, the average particle size of the feed material is reduced to below 4 mm. Preferably, the average particle size of the feed material is reduced to below 3 mm. Preferably, the average particle size of the feed material is reduced to below 2 mm. Preferably, the average particle size of the feed material is reduced to below 1 mm. Preferably, the average particle size of the feed material is reduced to below 900 µm. Preferably, the average particle size of the feed material is reduced to below 800 µm. Preferably, the average particle size of the feed material is reduced to below 700 µm. Preferably, the average particle size of the feed material is reduced to below 600 µm. Preferably, the average particle size of the feed material is reduced to below 500 µm.

In one embodiment, the one or more pre-treatment steps are conducted in an inert atmosphere.

In one embodiment of the present invention, the shredded material is subjected to one or more beneficiation steps. Preferably, the beneficiation step separates at least some of the non-value materials from the feed stream.

In one form of the present invention, the one or more beneficiation steps comprises an air classification step. The inventors have found that air classification is useful for the separating of the light plastics from the heavier metal values.

In one form of the present invention, the one or more beneficiation steps comprises a magnetic separation step. The inventors have found that magnetic separation is useful in separating the magnetic casing material from the anode and cathode materials.

In one embodiment, the size reduction step is performed prior to the beneficiation step. In an alternative embodiment, the size reduction step is performed after the beneficiation step.

### Leaching Circuit

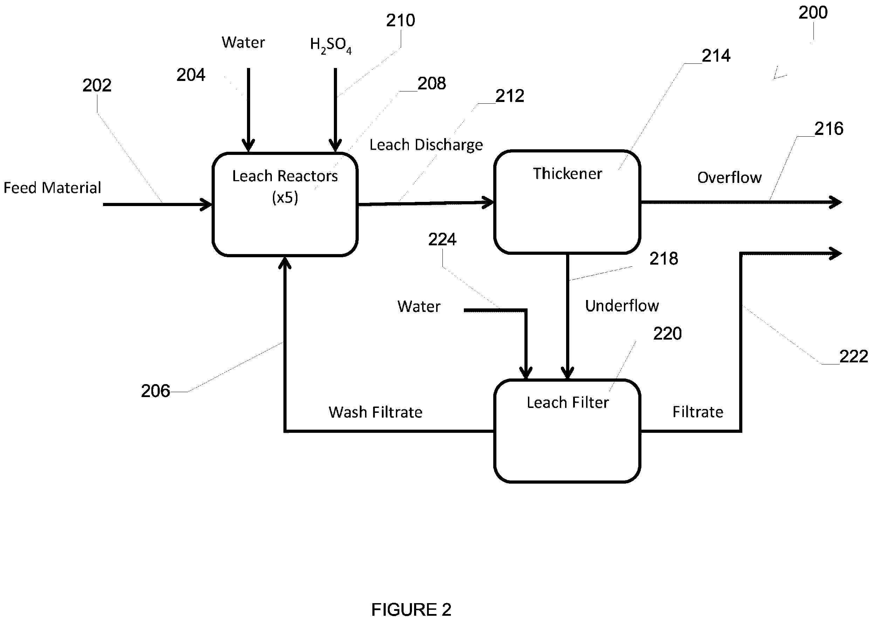

As discussed above, the processed feed materials are directed to a leaching circuit where it is subjected to a sulphuric acid leach to form a slurry comprising a pregnant leach solution of soluble metal salts and a solid residue. Figure 2 shows a flowsheet of a leaching circuit 200 in accordance with one embodiment of the present invention. In leaching circuit 200, the feed material 202 is mixed with water 204 and wash filtrate 206 to form a slurry with a target solids content. The target solids content is dependent on the grade of the feed material and is manipulated such that sufficient dilution water is present in the discharge from the leach to maintain all soluble salts in solution.

The slurry is passed to a series of leach reactors 208. Concentrated sulphuric acid 210 is added to the leach reactors 208 in sufficient excess to maintain a free acid concentration. At least a portion of any copper, cobalt, aluminium, iron, nickel, lithium and manganese are extracted into solution, forming a leach solution 212. Metals and their compounds react with sulphuric acid to produce their respective sulfate salts via multiple potential reaction pathways, some of the dominant reactions are presented below:

Cu ₍ₛ₎ + 2 H₂SO_{4 (aq)} = CuSO_{4 (aq)} + SO_{2 (g)} + 2 H₂O

2LiCoO_{2 (s}) + H₂SO_{4 (aq)} + 2SO_{2 (g)} = Li₂SO_{4 (aq)} + 2CoSO_{4 (aq)} + H_{2 (g)}

2LiMnNiCoO₂₍ₛ₎ + 7H₂SO_{4(aq)} = Li₂SO_{4(aq)}+2NiSO_{4(aq)} + 2MnSO_{4(aq)}+2CoSO_{4(aq)}+ 4H₂O+3H_{2 (g)}

2Al₍ₛ₎ + 3H₂SO_{4 (aq)} = Al₂(SO₄)_{3 (aq)} + 3H_{2 (g)}

2Fe₍ₛ₎ + 3H₂SO_{4 (aq)} = Fe₂(SO₄)_{3 (aq)} + 3H_{2 (g)}

Ni₍ₛ₎ + H₂SO_{4 (aq)} = NiSO_{4 (aq)} + H_{2 (g)}

Mn₍ₛ₎ + H₂SO_{4 (aq)} = MnSO_{4 (aq)} + H_{2 (g)}

2LiOH₍ₛ₎ + H₂SO_{4 (aq)} = Li₂SO_{4 (aq)} + 2H₂O _{(g)}

Where multiple leach reactors 108 are used, the leach reactors are arranged in series

In one embodiment, a gas scrubbing system (not shown) is connected to the headspace of the leach reactors 208 to remove water vapour and any other gases produced in the leach reactors 208.

Whilst a tank leach process is described above, it is envisaged that the person skilled in the art may select from any leaching circuit available in the art to achieve the same effect.

The resultant leach solution 212 is a slurry containing the pregnant leach solution and solid residue. The leach solution 212 is directed to a thickener 214 in order to dewater the leach solution 212 slurry. The overflow 216 from the thickener 214 is free of solids and is collected in a holding tank (not shown) for further processing. The underflow 218 from the thickener 214 is discharged, at a high solids content of approximately 65% solids by weight, to leach filter 220.

The underflow 218 is passed to the leach filter 220 where it is dewatered further to produce a relatively dry filter cake at approximately 15% moisture content. Primary filtrate 222 is collected and passed to a holding tank (not shown) for further processing. Fresh water 224 is used in the leach filter 220 to wash the cake and maximise recovery of pregnant leach solution entrained in the filter cake. The wash filtrate 206 is recycled back to the head of the leach circuit 200 where it is combined with feed material 202. Filter cake is discharged from the leach filter 220 and passed to a residue stockpile for disposal.

### Leaching Circuit Conditions

In one form of the present invention, the feed material is mixed with water and/or wash filtrate to a target solids content. Preferably, the target solids content is between 5% and 70% by weight. More preferably, the target solids content is between 10% and 30% by weight. Still preferably, the target solids content is about 20% by weight. The inventors have found that the preferred target solids content is depended on the grade of the feedstock. Generally speaking, the higher the feedstock grade, the lower the target solids content.

In one form of the present invention, the concentration of the sulphuric acid is at least 1 g/L. Preferably, the concentration of the sulphuric acid is at least 2 g/L. Preferably, the concentration of the sulphuric acid is at least 3 g/L. Preferably, the concentration of the sulphuric acid is at least 4 g/L. Preferably, the concentration of the sulphuric acid is at least 5 g/L. Preferably, the concentration of the sulphuric acid is at least 6 g/L. Preferably, the concentration of the sulphuric acid is at least 7 g/L. Preferably, the concentration of the sulphuric acid is at least 8 g/L. Preferably, the concentration of the sulphuric acid is at least 9 g/L. Preferably, the concentration of the sulphuric acid is at least 10 g/L. As would be appreciated by a person skilled in the art, the concentration of the sulphuric acid in the leach solution will affect the reaction/dissolution kinetics. If operated too low, the reaction will be slow to a point where it becomes impractical.

In one embodiment, the amount of sulphuric acid is sufficient to maintain a free acid concentration of at least 1 g/L. In one embodiment, the amount of sulphuric acid is sufficient to maintain a free acid concentration of at least 2 g/L. In one embodiment, the amount of sulphuric acid is sufficient to maintain a free acid concentration of at least 3 g/L. In one embodiment, the amount of sulphuric acid is sufficient to maintain a free acid concentration of at least 4 g/L. In one embodiment, the amount of sulphuric acid is sufficient to maintain a free acid concentration of at least 5 g/L. In one embodiment, the amount of sulphuric acid is sufficient to maintain a free acid concentration of at least 6 g/L. In one embodiment, the amount of sulphuric acid is sufficient to maintain a free acid concentration of at least 7 g/L. In one embodiment, the amount of sulphuric acid is sufficient to maintain a free acid concentration of at least 8 g/L. In one embodiment, the amount of sulphuric acid is sufficient to maintain a free acid concentration of at least 9 g/L. In one embodiment, the amount of sulphuric acid is sufficient to maintain a free acid concentration of at least 10 g/L.

Preferably, the step of subjecting the feed stream to a sulphuric acid leach to form a slurry comprising a pregnant leach solution of soluble metal salts and a solid residue is performed at atmospheric pressure. Methods for leaching materials at atmospheric pressure are well known to persons skilled in the art, and include vat leaching and tank leaching.

In preferred forms of the invention, the step of subjecting the feed stream to a sulphuric acid leach to form a slurry comprising a pregnant leach solution of soluble metal salts and a solid residue takes place at elevated temperatures. In one embodiment, the step of subjecting the feed stream to a sulphuric acid leach to form a slurry comprising a pregnant leach solution of soluble metal salts and a solid residue is conducted at a temperature of at least 40 °C. In one embodiment, the step of subjecting the feed stream to a sulphuric acid leach to form a slurry comprising a pregnant leach solution of soluble metal salts and a solid residue is conducted at a temperature of at least 45 °C. In one embodiment, the step of subjecting the feed stream to a sulphuric acid leach to form a slurry comprising a pregnant leach solution of soluble metal salts and a solid residue is conducted at a temperature of at least 50 °C. In one embodiment, the step of subjecting the feed stream to a sulphuric acid leach to form a slurry comprising a pregnant leach solution of soluble metal salts and a solid residue is conducted at a temperature of at least 55 °C. In one embodiment, the step of subjecting the feed stream to a sulphuric acid leach to form a slurry comprising a pregnant leach solution of soluble metal salts and a solid residue is conducted at a temperature of at least 60 °C. In one embodiment, the step of subjecting the feed stream to a sulphuric acid leach to form a slurry comprising a pregnant leach solution of soluble metal salts and a solid residue is conducted at a temperature of at least 65 °C. In one embodiment, the step of subjecting the feed stream to a sulphuric acid leach to form a slurry comprising a pregnant leach solution of soluble metal salts and a solid residue is conducted at a temperature of at least 70 °C. In one embodiment, the step of subjecting the feed stream to a sulphuric acid leach to form a slurry comprising a pregnant leach solution of soluble metal salts and a solid residue is conducted at a temperature of at least 75 °C. In one embodiment, the step of subjecting the feed stream to a sulphuric acid leach to form a slurry comprising a pregnant leach solution of soluble metal salts and a solid residue is conducted at a temperature of at least 80 °C. In one embodiment, the step of subjecting the feed stream to a sulphuric acid leach to form a slurry comprising a pregnant leach solution of soluble metal salts and a solid residue is conducted at a temperature of at least 85 °C. In one embodiment, the step of subjecting the feed stream to a sulphuric acid leach to form a slurry comprising a pregnant leach solution of soluble metal salts and a solid residue is conducted at a temperature of at least 90 °C.

In an embodiment of the present invention where the leach is performed at elevated temperature, the leach reactors are preferably heated with steam.

In one embodiment of the present invention, the step of the step of subjecting the feed stream to a sulphuric acid leach to form a slurry comprising a pregnant leach solution of soluble metal salts and a solid residue more preferably comprises:
subjecting the feed stream to a sulphuric acid leach in the presence of an oxidising agent to form a slurry comprising a pregnant leach solution of soluble metal salts and a solid residue.

As would be appreciated by a person skilled in the art, metallic copper is not easily directly soluble in sulphuric acid, resulting in slow or incomplete extraction. The inventors have found that providing an oxidizing agent during the sulphuric acid leach step will ensure almost complete leaching of the copper. In one form of the present invention, the oxidisation agent is hydrogen peroxide.

### Solvent Extraction

Following the step of separating the pregnant leach solution and the solid residue, the pregnant leach solution is passed to one or more separate solvent extraction steps to recover value metals.

Throughout this specification, unless the context requires otherwise, the term "extractant" will be understood to refer to an organic compound dissolved in an organic solvent. The organic compound typically has an available proton which can be exchanged with a metal ion from the aqueous solution.

Throughout this specification, unless the context requires otherwise, the term "loaded extractant" and variations such as "loaded organic", will be understood to refer to an extractant that has been enriched with metal ions that have transferred from the aqueous solution to the extractant.

Throughout this specification, unless the context requires otherwise, the term "scrubbing" will be understood to refer to a purification step of a loaded extractant in which at least some undesired elements are removed.

Throughout this specification, unless the context requires otherwise, the term "stripping" will be understood to refer to a step transferring a metal of interest from the loaded extractant to an aqueous phase by addition of stripping solution, typically in the form of a diluted or concentrated acid or basic solution.

### Copper Solvent Extraction Circuit

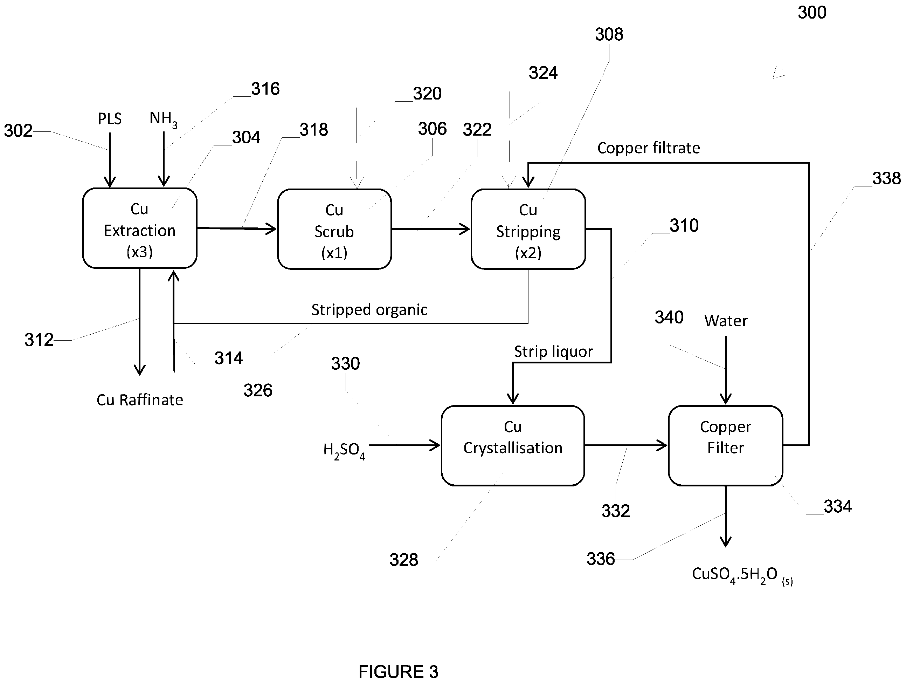

Following the step of separating the pregnant leach solution and the solid residue, the pregnant leach solution is passed to a copper solvent extraction circuit to recover copper. Figure 3 shows a flowsheet of a copper solvent extraction circuit 300 in accordance with one embodiment of the present invention. Pregnant leach solution 302 from the leach circuit 200 is directed to the copper solvent extraction circuit 300. In the embodiment shown in the Figure 3, the copper solvent extraction circuit 300 comprises an extraction stage 304, a scrubbing stage 306 and a stripping stage 308 to selectively recover copper from the pregnant leach solution 302 into a copper strip liquor 310. The Cu-free raffinate 312 is directed to a holding tank for further processing.

Prior to being directed to the extraction stages 304, the pregnant leach solution 302 is pumped through a counter-current heat exchanger (not shown) to reduce the temperature of the pregnant leach solution 302.

The cooled pregnant leach solution 302 is directed to the extraction stage 304.

In one embodiment of the present invention, the extraction stage comprises one or more solvent extraction mixer settlers. More preferably, the extraction stage comprises two or more solvent extraction mixer settlers. Still preferably, the extraction stage comprises three or more solvent extraction mixer settlers.

In one embodiment, where the extraction phase comprises two or more solvent extraction mixer settlers, the two or more solvent extraction mixer settlers are arranged in series.

In one embodiment, where the extraction stage comprises two or more solvent extraction mixer settlers arranged in series, the mixer settlers are arranged for counter-current operation.

In the embodiment shown in Figure 3, the extraction stage 304 comprises three solvent extraction mixer settlers arranged in series. It is envisaged by the inventors that one or more mixer settlers may be used. The pregnant leach solution 302 is directed to the first mixer settler where it is contacted with a copper extractant 314 to selectively extract copper from the pregnant leach solution 302.

In a preferred form of the present invention, the copper extractant is an organic extractant. More preferably, the copper extractant is an oxime. Still preferably the copper extractant is LIX841.

The generic extraction reaction is presented in Equation 1 below:

*2RH + CuSO₄ = CuR₂ + H₂SO₄* (1)

The pregnant leach solution 302 and the copper extractant 314 are contacted in a counter-current arrangement to maximize extraction efficiency. Ammonia solution 316 is dosed to each of the mixer-settlers to maintain a target pH by neutralizing sulphuric acid via the reaction presented in Equation 2:

*H₂SO₄ + 2NH₃ = (NH4)₂SO₄* *(2)*

Copper is selectively recovered from the pregnant leach solution 302 and the Cu-free raffinate 312 is directed to a holding tank for further processing.

The loaded extractant 318 is directed to a scrubbing stage 306. In scrubbing stage 306, the copper loaded extractant 318 is contacted with a portion of a scrub solution 320 that contains copper ions. The copper in the scrub solution 320 preferentially loads onto the loaded extractant 318 and displaces any impurity elements loaded onto the loaded extractant 318 in the extraction stage 304.

In one embodiment of the present invention, the scrubbing stage comprises one or more mixer settlers.

In the embodiment shown in Figure 3, the scrubbing stage 306 comprises a single mixer-settler.

The aqueous phase from the scrubbing stage 306 is directed back to the first extraction mixer-settler. Loaded extractant 322 from the scrubbing stage 306 advances to a stripping stage 308. In the stripping stage 308, the loaded extractant 322 is contacted with an acidic strip solution 324 to displace the majority of copper ions on the organic (in a reversal of the extraction reaction detailed in Equation 1) into the aqueous phase, producing the copper strip liquor 310.

In one embodiment, the stripping stage comprises one or more mixer settlers. Preferably, the stripping stage comprises two or more mixer settlers.

In an embodiment where the stripping stage comprises two or more mixer settlers, the two or more mixer settlers are arranged in series.

The organic phase 326 exiting the stripping stage 308 is recycled to the extraction stage 304 where it again loads with copper. In this way the organic phase 326 is kept in a closed circuit within the copper solvent extraction circuit 300.

A portion of the copper strip liquor is recycled for use as the scrub solution in the scrubbing stage 306.

The copper strip liquor 310 from the stripping stage 306 is directed to a copper crystallization stage 328. In the copper crystallization stage 328, the copper strip liquor 310 is contacted with sulphuric acid 330 to force the crystallisation of copper sulfate penthydrate (CuSO₄.5H₂O) as a solid in a salting crystallisation process. The copper crystallization stage 328 produces a slurry 332 of copper sulfate penthydrate and in a sulphuric liquor.

In one form of the present invention, the copper crystallization stage comprises a crystallisation unit. Preferably, the crystallisation step is performed in a jacketed reaction vessel or scraped surface crystallizer.

The slurry 332 from the copper crystallization stage 328 is passed to a filtration stage 334. In the filtration stage 334, copper sulfate solids 336 are separated from acidic liquor 338. Water 340 is used in the filtration stage 334 to wash the filter cake and maximise removal of entrained acidic liquor 338 in the filter cake.

Preferably, the filtration stage comprises a solid liquid separation device. More preferably, the solid liquid separation device is a plate and frame filter.

In one embodiment, the acidic liquor is 338 is recycled back to the stripping stage 306. A portion of the copper filtrate is recycled for use in the scrubbing stage 306.

### Copper Solvent Extraction Circuit Conditions

In one form of the present invention, the pregnant leach solution is cooled prior to being directed to the extraction stage. In one embodiment, the pregnant leach solution is cooled to below 65 °C. In one embodiment, the pregnant leach solution is cooled to below 60 °C. In one embodiment, the pregnant leach solution is cooled to below 55 °C. In one embodiment, the pregnant leach solution is cooled to below 50 °C. In one embodiment, the pregnant leach solution is cooled to below 45 °C. In one embodiment, the pregnant leach solution is cooled to below 40 °C. In one embodiment, the pregnant leach solution is cooled to below 35 °C. In one embodiment, the pregnant leach solution is cooled to below 30 °C. Preferably, the pregnant leach solution is cooled to at least below 50 °C. The maximum temperature is determined by the flash point, with it being practical to operate at least 10 °C below this temperature.

In one form of the present invention, the copper extractant is diluted to a target concentration with a diluent. Preferably, the target concentration is between 20% and 40% on a volume basis. More preferably, the target concentration is about 30% on a volume basis. As would be appreciated by a person skilled in the art the dilution of the copper extractant is used to control viscosity.

In forms of the invention, where the copper extractant is diluted with a diluent, the diluent is Shellsol2046.

In a preferred form of the present invention, the ratio of organic to aqueous in the extraction stage is 2.15:1. As would be appreciated by a person skilled in the art, the ratio of organic to aqueous in the extraction stage is dependent on the copper tenor in the pregnant leach solution as well as the loading of copper on the organic. One method for calculation of equilibrium concentration of extractant is using the material balance, i.e. it is equal to the difference between total (analytical) concentration of extractant and the sum of all solvated species in the solvent phase.

Preferably, the target pH of the pregnant leach solution in the extraction stage is between 1 and 3. More preferably, the target pH of the pregnant leach solution in the extraction stage is 2.

In one form of the present invention, the ratio of the copper loaded extractant to the scrub solution is between 20:1 and 100:1 (organic:aqueous) on a volume basis. Preferably the ratio is between 25:1 and 50:1 (organic:aqueous) on a volume basis. More preferably, the ratio is about 35:1 (organic:aqueous) on a volume basis.

In one form of the present invention, the acidic strip solution 324 comprises sulphuric acid. Preferably, the sulphuric acid concentration of the strip solution is at least 100 g/L. More preferably, the sulphuric acid concentration of the strip solution is at least 110 g/L. More preferably, the sulphuric acid concentration of the strip solution is at least 120 g/L. More preferably, the sulphuric acid concentration of the strip solution is at least 130 g/L. More preferably, the sulphuric acid concentration of the strip solution is at least 140 g/L. More preferably, the sulphuric acid concentration of the strip solution is at least 150 g/L.

In one form of the present invention, the sulphuric acid concentration of the slurry exiting the crystallisation stage is between 150 and 350 g/L. Preferably, the sulphuric acid concentration of the slurry exiting the crystallisation stage is between 160 and 300 g/L. Preferably, the sulphuric acid concentration of the slurry exiting the crystallisation stage is between 170 and 275 g/L. Preferably, the sulphuric acid concentration of the slurry exiting the crystallisation stage is between 180 and 260 g/L. Preferably, the sulphuric acid concentration of the slurry exiting the crystallisation stage is between 190 and 250 g/L. Preferably, the sulphuric acid concentration of the slurry exiting the crystallisation stage is between 200 and 340 g/L. Preferably, the sulphuric acid concentration of the slurry exiting the crystallisation stage is about 220 g/L.

In one form of the present invention, the temperature of the crystallisation step is controlled. Preferably, the temperature of the crystallisation step is between 10 °C and 50 °C. Preferably, the temperature of the crystallisation step is between 20 °C and 40 °C. Preferably, the temperature of the crystallisation step is between 25 °C and 30 °C. As would be appreciated by a person skilled in the art, at lower temperatures copper sulfate that is less soluble, thereby maximising the recovery.

### Aluminium Solvent Extraction Circuit

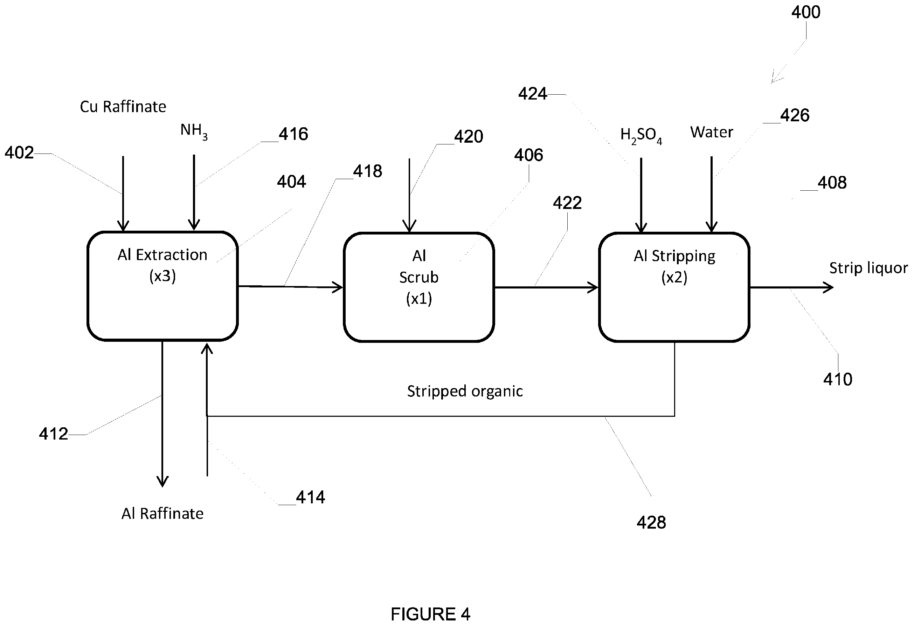

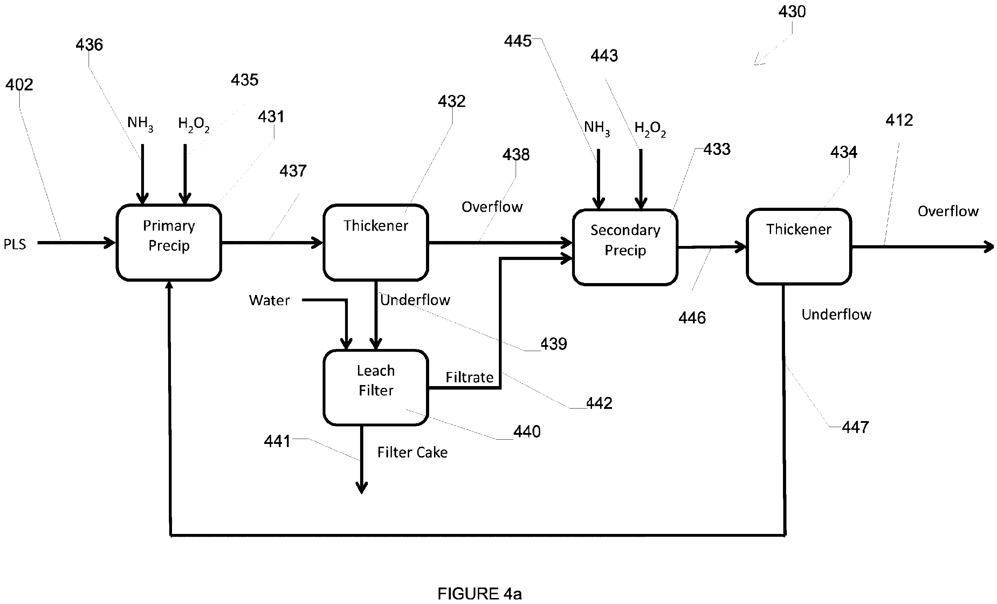

In one embodiment, following the step of separating the pregnant leach solution and the solid residue, and preferably after the copper solvent extraction step, the pregnant leach solution is passed to an aluminium solvent extraction circuit to recover aluminium. Figure 4 shows a flowsheet of an aluminium solvent extraction circuit 400 in accordance with one embodiment of the present invention. Pregnant leach solution 402 from the copper solvent extraction circuit is directed to the aluminium solvent extraction circuit 400. In the embodiment shown in the Figure 4, the aluminium solvent extraction circuit 400 comprises an extraction stage 404, a scrubbing stage 406 and a stripping stage 408 to selectively recover aluminium from the pregnant leach solution 402 into an aluminium strip liquor 410. The Al-free raffinate 412 is directed to a holding tank for further processing.

In one embodiment of the present invention, the extraction stage comprises one or more solvent extraction mixer settlers. More preferably, the extraction stage comprises two or more solvent extraction mixer settlers. Still preferably, the extraction stage comprises three or more solvent extraction mixer settlers.

In one embodiment, where the extraction phase comprises two or more solvent extraction mixer settlers, the two or more solvent extraction mixer settlers are arranged in series.

In one embodiment, where the extraction stage comprises two or more solvent extraction mixer settlers arranged in series, the mixer settlers are arranged for counter-current operation.

In the embodiment shown in Figure 4, the extraction stage 404 comprises three solvent extraction mixer settlers arranged in series. It is envisaged by the inventors that one or more mixer settlers may be used. The pregnant leach solution 402 is directed to the first mixer settler where it is contacted with an aluminium extractant 414 to selectively extract aluminium from the pregnant leach solution 402. Iron and any remaining copper ion will also be extracted aluminium from the pregnant leach solution 402.

In a preferred form of the present invention, the aluminium extractant is an organic extractant. More preferably, the aluminium extractant is selected from a phosphinic acid type organic extractant, a phosphonic acid type organic extractant and a phosphoric acid type organic extractant. Still preferably the aluminium extractant is selected from Cyanex272, lonquest 801 (PC88A) and D2EHPA.

The generic extraction reaction is presented in Equation 3 below:

*6RH* + *X₂(SO₄)₃* = *2XR₃* + *3H₂SO₄ (where X = Al*⁺*³ , Fe⁺³)* (3)

The pregnant leach solution 402 and the aluminium extractant 414 are contacted in a counter-current arrangement to maximize extraction efficiency. Ammonia solution 416 is dosed to each of the mixer-settlers to maintain a target pH by neutralizing sulphuric acid via the reaction presented in Equation 2.

Aluminium, iron and copper ions are selectively recovered from the pregnant leach solution 402 and the Al-free raffinate 412 is directed to a holding tank for further processing.

The loaded extractant 418 is directed to a scrubbing stage 406. In scrubbing stage 406, the aluminium loaded extractant 418 is contacted with a portion of a scrub solution 420 that contains aluminium ions. The aluminium ions in the scrub solution 420 preferentially loads onto the loaded extractant 418 and displaces any impurity elements loaded onto the loaded extractant 418 in the extraction stage 404.

In one embodiment of the present invention, the scrubbing stage comprises one or more mixer settlers.

In the embodiment shown in Figure 4, the scrubbing stage 406 comprises a single mixer-settler.

The aqueous phase from the scrubbing stage 406 is directed back to the first extraction mixer-settler. Loaded extractant 422 from the scrubbing stage 406 advances to a stripping stage 408. In the stripping stage 408, the loaded extractant 422 is contacted with an acidic strip solution 424. The acidic strip solution results in the displacement of the majority of ions on the organic (in a reversal of the extraction reaction detailed in Equation 3) into the aqueous phase, producing the aluminium strip liquor 410. Sufficient water 426 is added in the stripping stage 406 to prevent the crystallisation of salts in the aluminium strip liquor 410. The aluminium strip liquor 410 is directed to aluminium product storage. A portion of the aluminium strip liquor 410 is recycled for use as the scrub solution in the scrubbing stage.

In one embodiment, the stripping stage 408 comprises one or more mixer settlers. Preferably, the stripping stage 408 comprises two or more mixer settlers.

In an embodiment where the stripping stage 408 comprises two or more mixer settlers, the two or more mixer settlers are arranged in series.

The organic phase 428 exiting the stripping stage 408 is recycled to the extraction stage 404 where it again loads with aluminium. In this way, the organic phase 428 is kept in a closed circuit within the aluminium solvent extraction circuit 400.

### Aluminium Solvent Extraction Circuit Conditions

In one form of the present invention, the aluminium extractant is diluted to a target concentration with a diluent. Preferably, the target concentration is between 20% and 40% on a volume basis. More preferably, the target concentration is about 30% on a volume basis.

In forms of the invention, where the aluminium extractant is diluted with a diluent, the diluent is Shellsol2046.

In a preferred form of the present invention, the ratio of organic to aqueous in the extraction stage is 1.85:1. As would be appreciated by a person skilled in the art, the ratio of organic to aqueous in the extraction stage is dependent on the aluminium tenor in the pregnant leach solution as well as the loading of aluminium on the organic. One method for calculation of equilibrium concentration of extractant is using the material balance, i.e. it is equal to the difference between total (analytical) concentration of extractant and the sum of all solvated species in the solvent phase.

Preferably, the target pH of the pregnant leach solution in the extraction stage is between 2 and 3.5. More preferably, the target pH of the pregnant leach solution in the extraction stage is 3.3

In one form of the present invention, the ratio of the aluminium loaded extractant to the scrub solution is between 20:1 and 100:1 (organic:aqueous) on a volume basis. Preferably the ratio is between 30:1 and 70:1 (organic:aqueous) on a volume basis. More preferably, the ratio is about 50:1 (organic:aqueous) on a volume basis.

In one form of the present invention, the loaded extractant is contacted with sufficient acidic strip solution to achieve a target pH in the aluminium strip liquor. Preferably, the target pH is less than 2. More preferably, the target pH is less than 1.5. More preferably, the target pH is less than 1. The inventors have found that if the pH is above 2 there is insufficient acid concentration to strip the metal from the extractant.

In one form of the present invention, water is added to the stripping stage to reach a target concentration of aluminium in the aluminium strip liquor. Preferably, the target concentration is between 50 g/L and 70 g/L.

### Aluminium Recovery Circuit

Aluminium and iron are recovered from the pregnant leach solution by way of a precipitation step. In Figure 4a there is shown an aluminium precipitation circuit 430. Like numerals with Figure 3 denotes like parts. Similar to the discussion above, the pregnant leach solution is preferably passed to the aluminium precipitation circuit 430 after the copper solvent extraction step.

In the embodiment shown in the Figure 4a, the aluminium precipitation circuit 430 comprises a primary precipitation stage 431, a primary thickening stage 432, a secondary precipitation stage 433 and a secondary thickening stage 434 to selectively precipitate and recover aluminium and iron from the pregnant leach solution 402. The Al-free raffinate 412 is directed to a holding tank for further processing.

In the primary precipitation stage 431, the solution is contacted with an oxidant 435 to oxidise ferrous iron species in the solution to ferric ions. Suitable oxidants are known to those skilled in the art and include, air, oxygen gas, oxygen enriched gases and hydrogen peroxide. The solution pH is increased to the range of 3.2 to 4 by the addition of ammonia 436. A number of other bases may be used to increase the solution pH, for example lime or limestone. The majority of the aluminium and iron values in the solution are precipitated as hydroxides in a slurry 437.

The resulting slurry 437 is directed to the first thickening stage 432. The slurry 437 is thickened and the overflow 438 is directed to the secondary precipitation stage 433. The underflow 439 from the first thickening stage 432 is directed to a filtration stage 440. The filter residue 441 is recovered and directed to further treatment or disposal. The filtrate 442 is directed to the secondary precipitation stage 433.

Preferably, the first thickening stage 431 is conducted using a conventional thickening apparatus. Other means of solid liquid separation used by those skilled in the art may be employed.

In the secondary precipitation stage 433, the solution is contacted with an oxidant 443 to oxidise ferrous iron species in the solution to ferric ions. Suitable oxidants are known to those skilled in the art and include, air, oxygen gas, oxygen enriched gases and hydrogen peroxide. The solution pH is increased to above 4.5 through the addition of ammonia 445. In one embodiment, the pH is increased to a range of 4.5-6.0. A number of other bases may be used to increase the solution pH, for example lime or limestone. The use of an oxidant 443 in both precipitations steps has been found to be advantageous as the oxidation rate of ferrous to ferric is slow at the low pH of the first stage and much faster at the higher pH in the second stage. The remaining aluminium and iron values in the solution are precipitated as hydroxides in a slurry 446.

The resulting slurry 446 is directed to the secondary thickening stage 433. The slurry 446 is thickened and the overflow 412, which is substantially free of aluminium and iron is directed to a holding tank for further processing. The thickener underflow 447 may be recycled to the first precipitation stage 431 to minimise any loses. Alternatively or additionally, the thickener underflow 447 may be directed to the leach circuit or a separate acid dissolution stage to recover co-precipitated cobalt, nickel and lithium.

Preferably, the secondary thickening stage 433 is conducted using a conventional thickening apparatus.

The inventors have also found that the primary precipitation stage and the secondary precipitation stage may be replaced with a single precipitation stage at pH 4.5-6 in the presence of an oxidant. The disadvantage with such an approach however is that there are greater losses of cobalt.

### Aluminium Recovery Circuit Conditions

In one form of the present invention, the primary precipitation stage is conducted at a temperature above 50°C. Preferably, the primary precipitation stage is conducted at a temperature above 55°C. More preferably, the primary precipitation stage is conducted at a temperature above 60°C. Still preferably, the primary precipitation stage is conducted at a temperature above 65°C.

In one form of the present invention, the secondary precipitation stage is conducted at a temperature above 50°C. Preferably, the secondary precipitation stage is conducted at a temperature above 55°C. More preferably, the secondary precipitation stage is conducted at a temperature above 60°C. Still preferably, the secondary precipitation stage is conducted at a temperature above 65°C.

In one form of the present invention, the Eh of the solution in at least one of the precipitation steps is at least 400 mV Ag/AgCl.

### Cobalt / Manganese Recovery Circuit

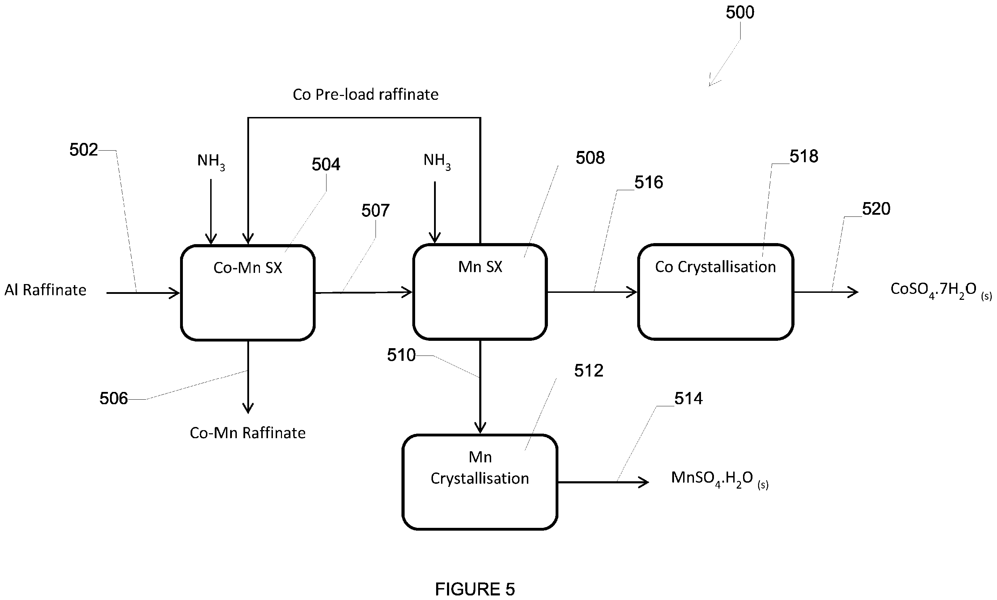

Following the step of separating the pregnant leach solution and the solid residue, and preferably after the copper solvent extraction step and the aluminium solvent extraction step, the pregnant leach solution is passed to a cobalt / manganese recovery circuit to recover cobalt and manganese. Figure 5 shows a flowsheet of a cobalt / manganese recovery circuit 500 in accordance with one embodiment of the present invention. Pregnant leach solution 502 from the aluminium solvent extraction circuit 400 is directed to the cobalt / manganese recovery circuit 500.

In the embodiment shown in the Figure 5, the cobalt / manganese recovery circuit 500 comprises a Co-Mn solvent extraction circuit 504 to selectively recover cobalt / manganese from the pregnant leach solution 502. The Co-Mn-free raffinate 506 is directed to a holding tank for further processing. A resulting Co-Mn stream 507 is directed for further processing. The cobalt / manganese recovery circuit 500 further comprises a manganese solvent extraction circuit 508 to separate cobalt and manganese. A resulting cobalt containing stream 510 is directed to a cobalt crystallisation stage 512 to recover a cobalt product 514. A resulting manganese containing stream 516 is directed to a manganese crystallisation stage 518 to recover a manganese product 520.

### Co-Mn Solvent Extraction Circuit

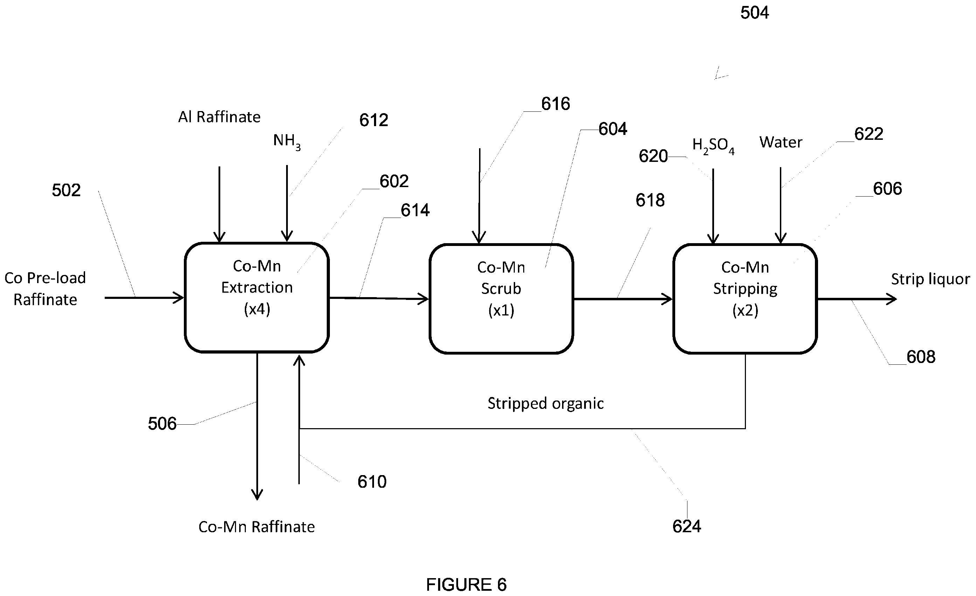

A detailed view of the Co-Mn solvent extraction circuit 504 is shown in Figure 6, like numerals with Figure 5 denote like parts. The Co-Mn solvent extraction circuit 504 comprises an extraction stage 602, a scrubbing stage 604 and a stripping stage 606 to selectively recover cobalt / manganese from the pregnant leach solution 502 into a Co-Mn strip liquor 608. The Co-Mn-free raffinate 506 is directed to a holding tank for further processing.

In one embodiment of the present invention, the extraction stage comprises one or more solvent extraction mixer settlers. More preferably, the extraction stage comprises two or more solvent extraction mixer settlers. Still preferably, the extraction stage comprises three or more solvent extraction mixer settlers.

In one embodiment, where the extraction phase comprises two or more solvent extraction mixer settlers, the two or more solvent extraction mixer settlers are arranged in series.

In one embodiment, where the extraction stage comprises two or more solvent extraction mixer settlers arranged in series, the mixer settlers are arranged for counter-current operation.

In the embodiment shown in Figure 6, the extraction stage 602 comprise four solvent extraction mixer settlers arranged in series. It is envisaged by the inventors that one or more mixer settlers may be used. The pregnant leach solution 502 is directed to the first mixer settler where it is contacted with a Co-Mn extractant 610 to selectively extract cobalt / manganese from the pregnant leach solution 502.

In a preferred form of the present invention, the Co-Mn extractant is selected from a phosphinic acid type organic extractant, a phosphonic acid type organic extractant and a phosphoric acid type organic extractant. Still preferably, the Co-Mn extractant is selected from Cyanex272, lonquest 801 (PC88A) and D2EHPA.

The generic extraction reaction is presented in Equation 4 below:

*2RH + XSO₄ = XR₂ + H₂SO₄ (where X =* Co⁺*² , Mn⁺²)* (4)

The pregnant leach solution 502 and the Co-Mn extractant 610 are contacted in a counter-current arrangement to maximize extraction efficiency. Ammonia solution 612 is dosed to each of the mixer-settlers to maintain a target pH by neutralizing sulphuric acid via the reaction presented in Equation 2.

Cobalt and manganese are selectively recovered from the pregnant leach solution 502 and the Co-Mn-free raffinate 506 is directed to a holding tank for further processing.

The loaded extractant 614 is directed to a scrubbing stage 604. In scrubbing stage 604, the loaded extractant 614 is contacted with a portion of a scrub solution 616. The cobalt / manganese in the scrub solution 616 preferentially loads onto the loaded extractant 614 and displaces some impurity elements loaded onto the loaded extractant 614 in the extraction stage 602.

In one embodiment of the present invention, the scrubbing stage comprises one or more mixer settlers.

In the embodiment shown in Figure 6, the scrubbing stage 604 comprises a single mixer-settler.

The aqueous phase from the scrubbing stage 604 is directed back to the first extraction mixer-settler. Loaded extractant 618 from the scrubbing stage 604 advances to a stripping stage 606. In the stripping stage 606, the loaded extractant 618 is contacted with an acidic strip solution 620 to displace the majority of cobalt / manganese ions on the organic (in a reversal of the extraction reaction detailed in Equation 1) into the aqueous phase, producing the Co-Mn strip liquor 608. Sufficient water 622 is added in the stripping stage 606 to prevent the crystallisation of salts in the Co-Mn strip liquor 608.

The Co-Mn strip liquor 608 is directed to the manganese solvent extraction circuit 508.

In one embodiment, the stripping stage comprises one or more mixer settlers. Preferably, the stripping stage comprises two or more mixer settlers.

In an embodiment where the stripping stage comprises two or more mixer settlers, the two or more mixer settlers are arranged in series.

The organic phase 624 exiting the stripping stage 606 is recycled to the extraction stage 602 where it again loads with cobalt / manganese. In this way the organic phase 624 is kept in a closed circuit within the cobalt / manganese solvent extraction circuit 504. The Co-Mn strip liquor 608 is directed to the manganese solvent extraction circuit 508.

### Cobalt / Manganese Solvent Extraction Circuit Conditions

In one form of the present invention, the Co-Mn extractant is diluted to a target concentration with a diluent. Preferably, the target concentration is between 15% and 35% on a volume basis. More preferably, the target concentration is about 30% on a volume basis. As would be appreciated by a person skilled in the art the dilution of the Co-Mn extractant is used to control viscosity.

In forms of the invention, where the Co-Mn extractant is diluted with a diluent, the diluent is Shellsol2046.

In a preferred form of the present invention, the ratio of organic to aqueous in the extraction stage is 3.1:1. As would be appreciated by a person skilled in the art, the ratio of organic to aqueous in the extraction stage is dependent on the cobalt / manganese tenor in the pregnant leach solution as well as the loading of cobalt / manganese on the organic. One method for calculation of equilibrium concentration of extractant is using the material balance, i.e. it is equal to the difference between total (analytical) concentration of extractant and the sum of all solvated species in the solvent phase.

Preferably, the target pH of the pregnant leach solution in the extraction stage is between 4.2 and 5. More preferably, the target pH of the pregnant leach solution in the extraction stage is 4.8.

In one form of the present invention, the ratio of the Co-Mn loaded extractant to the scrub solution is between 20:1 and 100:1 (organic:aqueous) on a volume basis. Preferably the ratio is between 30:1 and 70:1 (organic:aqueous) on a volume basis. More preferably, the ratio is about 50:1 (organic:aqueous) on a volume basis.

In one form of the present invention, the acidic strip solution comprises sulphuric acid.

In one form of the present invention, the loaded extractant is contacted with sufficient acidic strip solution to achieve a target pH in the Co-Mn strip liquor. Preferably, the target pH is below 3.

In one form of the present invention, water is added to the stripping stage to reach a target concentration of cobalt in the Co-Mn strip liquor. Preferably the target concentration is between 80 g/L and 140 g/L.

### Manganese Solvent Extraction Circuit

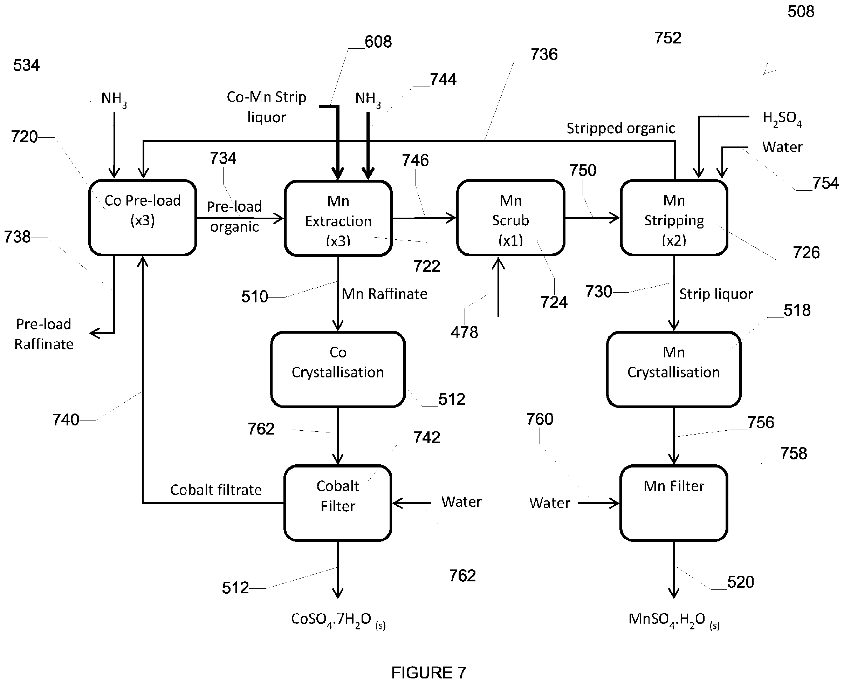

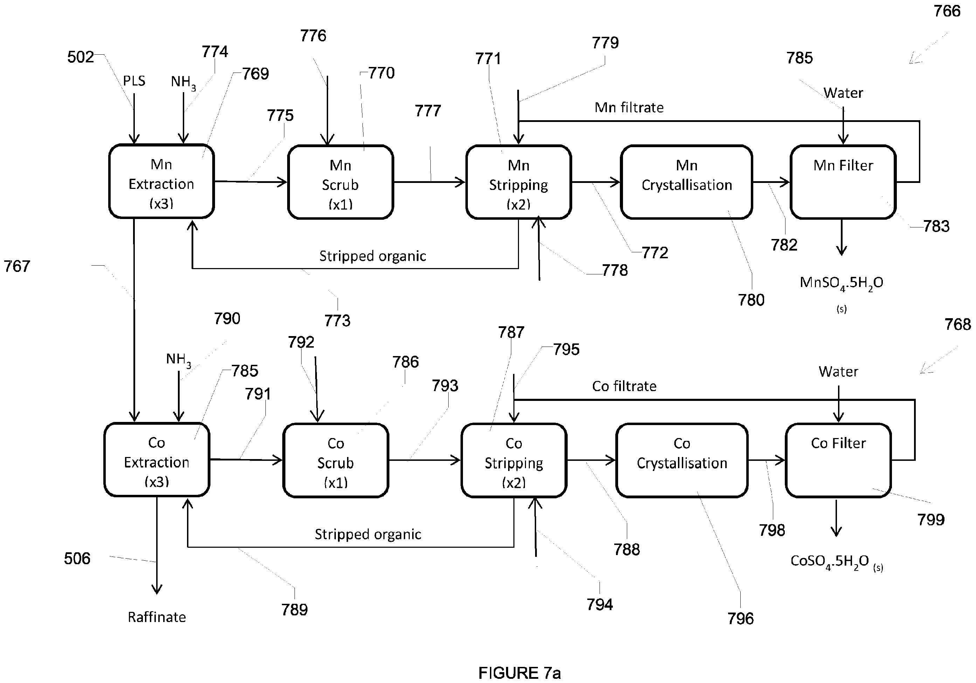

A detailed view of the manganese extraction circuit 508 is shown in Figure 7, like numerals with Figures 5 and 6 denote like parts. The manganese extraction circuit 508 comprises a preload stage 720, an extraction stage 722, a scrubbing stage 724 and a stripping stage 726 to selectively recover manganese from the Co-Mn strip liquor 608 into a manganese strip liquor 730 and a cobalt raffinate 732.

The Co-Mn strip liquor 608 is directed to the extraction stage 722 where it is contacted with a preload organic 734 from the preload stage 720. It is envisaged that the preload organic 734 may be supplemented or replaced with a fresh stream of manganese extractant (not shown).

In the preload stage 720, stripped organic 736 from the manganese stripping stage 726 (described below) is contacted with the cobalt filtrate 740 from the cobalt filter 742 (described below). It is envisaged that the manganese extraction circuit 508 may operate without the preload stage 720. In such an embodiment fresh manganese extractant would be introduced into the extraction stage 722. The use of the preload stage 720 has been found to prevent the need for ammonia to be introduced into the manganese solvent extraction circuit.

In one embodiment of the present invention, the extraction stage comprises one or more solvent extraction mixer settlers. More preferably, the extraction stage comprises two or more solvent extraction mixer settlers. Still preferably, the extraction stage comprises three or more solvent extraction mixer settlers.

In one embodiment, where the extraction phase comprises two or more solvent extraction mixer settlers, the two or more solvent extraction mixer settlers are arranged in series.

In one embodiment, where the extraction stage comprises two or more solvent extraction mixer settlers arranged in series, the mixer settlers are arranged for counter-current operation.

In the embodiment shown in Figure 7, the preload stage 720 comprises three mixer settlers arranged in series. It is envisaged by the inventors that one or more mixer settlers may be used. The cobalt filtrate 740 is directed to the first mixer settler where it is contacted with stripped organic 736 to selectively extract cobalt ions from the cobalt filtrate 740.

In a preferred form of the present invention, the stripped organic 736 from the manganese stripping stage 726 comprises a phosphoric acid type organic extractant. Still preferably the stripped organic 736 is Di-(2-ethylhexyl)phosphoric acid (D2EHPA).

The generic extraction reaction is presented in Equation 5 below:

*2RH + XSO₄ = XR₂ + H₂SO₄* (5)

The cobalt filtrate 740 and the stripped organic 736 are contacted in a counter-current arrangement to maximize extraction efficiency. Ammonia solution 534 is dosed to each of the mixer-settlers on fixed flowrate or to maintain a target pH by neutralizing sulphuric acid via the reaction presented in Equation 2.

The flow rate of the cobalt filtrate 740 directed to the preload stage 720 is controlled to achieve a target cobalt loading on the stripped organic 736. Preferably, the target cobalt loading is such that the moles of cobalt ions loaded are substantially equivalent to the moles of manganese ions in the Co-Mn strip liquor 608. A preferred ratio of Co:Mn is between 1:1 and 1.1:1. As such, the target loading is dependent on the manganese tenor in the Co-Mn strip liquor 608. If insufficient cobalt is loaded then ammonia will need to be introduced to the extraction stage to extract all the manganese.

The pre-load raffinate 510 still contains cobalt and so it can be directed to extraction stage 602 of the Co-Mn solvent extraction circuit 504.

The preload organic 734 is directed to the extraction stage 722 where it is contacted with the Co-Mn strip liquor 608.

In one embodiment of the present invention, the extraction stage comprises one or more solvent extraction mixer settlers. More preferably, the extraction stage comprises two or more solvent extraction mixer settlers. Still preferably, the extraction stage comprises three or more solvent extraction mixer settlers.

In one embodiment, where the extraction phase comprises two or more solvent extraction mixer settlers, the two or more solvent extraction mixer settlers are arranged in series.

In one embodiment, where the extraction stage comprises two or more solvent extraction mixer settlers arranged in series, the mixer settlers are arranged for counter-current operation. In the embodiment shown in Figure 7, the extraction stage 722 comprises three solvent extraction mixer settlers arranged in series. It is envisaged by the inventors that one or more mixer settlers may be used. The Co-Mn strip liquor 608 is directed to the first mixer settler where it is contacted with the preload organic 734, to selectively extract manganese from the Co-Mn strip liquor 608. Manganese ions preferentially load onto the preload organic 734, displacing cobalt ions via the reaction presented in Equation 6:

*CoR₂ + MnSO₄ = MnR₂ + CoSO₄* (6)

The Co-Mn strip liquor 608 and the preload organic 734 are contacted in a counter-current arrangement to maximize extraction efficiency. Ammonia solution 744 is dosed to each of the mixer-settlers to maintain a target pH by neutralizing sulphuric acid via the reaction presented in Equation 2.

Manganese is selectively recovered from the Co-Mn strip liquor 608 to produce a loaded organic 746. The Mn-free raffinate 510 is directed to the cobalt crystallisation stage 512.

The loaded organic 746 is directed to a scrubbing stage 724. In scrubbing stage 724, the manganese organic 736 is contacted with a portion of a scrub solution 748. The manganese in the scrub solution 748 preferentially loads onto the loaded organic 746 and displaces any cobalt loaded onto the loaded organic 746 by the reaction given in Equation 6.

In one embodiment of the present invention, the scrubbing stage comprises one or more mixer settlers.

In the embodiment shown in Figure 7, the scrubbing stage 724 comprises a single mixer-settler.

The aqueous phase from the scrubbing stage 724 is directed back to the first extraction mixer-settler. Loaded extractant 750 from the scrubbing stage 724 advances to a stripping stage 726. In the stripping stage 726, the loaded extractant 750 is contacted with an acidic strip solution 752 to displace the majority of manganese ions on the organic (in a reversal of the extraction reaction detailed in Equation 4) into the aqueous phase, producing the manganese strip liquor 730. Sufficient water 754 is added in the stripping stage 726 to prevent the crystallisation of salts in the manganese strip liquor 730.

In one embodiment, the stripping stage comprises one or more mixer settlers. Preferably, the stripping stage comprises two or more mixer settlers.

In an embodiment where the stripping stage comprises two or more mixer settlers, the two or more mixer settlers are arranged in series.

The organic phase 736 exiting the stripping stage 726 is recycled to the preload stage 720. In this way the organic phase 736 is kept in a closed circuit within the manganese solvent extraction circuit 704. The manganese strip liquor 730 is directed to the manganese crystallisation stage 518.

The manganese strip liquor 730 from the stripping stage 726 is directed to a manganese crystallization stage 518. In the manganese crystallization stage 518, water is removed from the manganese strip liquor 730 to cause the crystallisation of MnSO₄.H₂O in a slurry 756.

In one form of the present invention, the manganese crystallization stage comprises a crystallisation unit. Preferably, the crystallisation unit is an evaporative crystalliser.

The slurry 756 from the manganese crystallization stage 518 is passed to a filtration stage 758. In the filtration stage 758, manganese sulfate solids 520 are separated from filtrate. Water 760 is used in the filtration stage 758 to wash the filter cake and maximise recovery of manganese. The filtrate is recycled back to the manganese crystallization stage 518 to maximise the recovery of manganese. A portion of the filtrate may also be recycled for use in the manganese scrubbing stage 724.

The cobalt raffinate 510 from the extraction stage 722 is directed to a cobalt crystallization stage 512. In the cobalt crystallization stage 512, water is removed from the cobalt raffinate 510 to cause the crystallisation of CoSO₄.7H₂O in a slurry 762.

In one form of the present invention, the cobalt crystallization stage 512 comprises a crystallisation unit. Preferably, the crystallisation unit is an evaporative crystalliser.

The slurry 762 from the cobalt crystallization stage 512 is passed to a filtration stage 742. In the filtration stage 742, cobalt sulfate solids 514 are separated from filtrate. Water 764 is used in the filtration stage 742 to wash the filter cake and maximise recovery of cobalt. The filtrate is recycled back to the cobalt crystallization stage 512 to maximise the recovery of cobalt. A portion of the filtrate is recycled for use in the preload stage 720.

### Manganese Solvent Extraction Circuit Conditions

In one form of the present invention, the manganese extractant is diluted to a target concentration with a diluent. Preferably, the target concentration is between 15% and 35% on a volume basis. More preferably, the target concentration is about 30% on a volume basis. As would be appreciated by a person skilled in the art the dilution of the manganese extractant is used to control viscosity.

In forms of the invention, where the manganese extractant is diluted with a diluent, the diluent is Shellsol2046.

Preferably, the target pH of the preload stage is between 4.5 and 12. More preferably, the target pH of the preload stage is 4.8.

Preferably, the cobalt loading in the preloaded organic is at least 10 g/L. Preferably, the cobalt loading in the preloaded organic is at least 11 g/L. Preferably, the cobalt loading in the preloaded organic is at least 12 g/L. Preferably, the cobalt loading in the preloaded organic is at least 13 g/L. Preferably, the cobalt loading in the preloaded organic is at least 13.5 g/L. Preferably, the cobalt loading in the preloaded organic is at about 13.8 g/L.

**In** one form of the present invention, the preloaded organic is diluted to a target concentration with a diluent. Preferably, the target concentration is between 15% and 35% on a volume basis. More preferably, the target concentration is about 30% on a volume basis. As would be appreciated by a person skilled in the art the dilution of the manganese extractant is used to control viscosity.

**In** forms of the invention, where the preloaded organic is diluted with a diluent, the diluent is Shellsol2046.

**In** a preferred form of the present invention, the ratio of organic to aqueous in the extraction stage is 1.65:1. As would be appreciated by a person skilled in the art, the ratio of organic to aqueous in the extraction stage is dependent on the manganese tenor in the pregnant leach solution as well as the loading of manganese on the organic. One method for calculation of equilibrium concentration of extractant is using the material balance, i.e. it is equal to the difference between total (analytical) concentration of extractant and the sum of all solvated species in the solvent phase.

**In** one form of the present invention, the ratio of the manganese loaded extractant to the scrub solution is between 20:1 and 100:1 (organic:aqueous) on a volume basis. Preferably the ratio is between 30:1 and 70:1 (organic:aqueous) on a volume basis. More preferably, the ratio is about 50:1 (organic:aqueous) on a volume basis..

In one form of the present invention, the acidic strip solution comprises sulphuric acid.

In one form of the present invention, the loaded extractant is contacted with sufficient acidic strip solution to achieve a target pH in the manganese strip liquor. Preferably, the target pH is below 3.

In one form of the present invention, water is added to the stripping stage to reach a target concentration of manganese in the manganese strip liquor. Preferably the target concentration is between 100 g/L and 220 g/L.

### Sequential Manganese and Cobalt Solvent Extraction Circuits

As discussed above, cobalt and manganese may be co-extracted from the pregnant leach solution in a single solvent extraction step. In Figure 7a there is shown an alternative form of the present invention in which manganese and cobalt are sequentially recovered from the pregnant leach solution in separate solvent extraction steps. Like numerals with Figures 5 and 6, denote like parts. In this embodiment, pregnant leach solution 502 from the aluminium solvent extraction circuit 400 is directed to a manganese recovery circuit 766 to recover manganese from the pregnant leach solution 502. The manganese-free raffinate 767 is directed to a cobalt recovery circuit 768 to recover cobalt from the pregnant leach solution. The Co-Mn-free raffinate 506 is directed to a holding tank for further processing.

The Manganese solvent extraction circuit 766 comprises an extraction stage 769, a scrubbing stage 770 and a stripping stage 771 to selectively recover manganese from the pregnant leach solution 502 into a manganese strip liquor 772. The manganese-free raffinate 767 is directed to a holding tank for further processing.

In one embodiment of the present invention, the extraction stage 769 comprises one or more solvent extraction mixer settlers. More preferably, the extraction stage 769 comprises two or more solvent extraction mixer settlers. Still preferably, the extraction stage 769 comprises three or more solvent extraction mixer settlers.

In one embodiment, where the extraction phase 769 comprises two or more solvent extraction mixer settlers, the two or more solvent extraction mixer settlers are arranged in series.

In one embodiment, where the extraction stage 769 comprises two or more solvent extraction mixer settlers arranged in series, the mixer settlers are arranged for counter-current operation.

In the embodiment shown in Figure 7a, the extraction stage 769 comprises five solvent extraction mixer settlers arranged in series. It is envisaged by the inventors that one or more mixer settlers may be used. The pregnant leach solution 502 is directed to the first mixer settler where it is contacted with a manganese extractant 773 to selectively extract manganese from the pregnant leach solution 502.

In a preferred form of the present invention, the manganese extractant 773 is phosphoric acid type organic extractant. Still preferably, the manganese extractant is Di-(2-ethylhexyl)phosphoric acid (D2EHPA).

The generic extraction reaction is presented in Equation 5 below:

*2RH + MnSO₄ = XR₂ + H₂SO₄* (5)

The pregnant leach solution 502 and the manganese extractant 773 are contacted in a counter-current arrangement to maximize extraction efficiency. Ammonia solution 774 is dosed to each of the mixer-settlers to maintain a target pH by neutralizing sulphuric acid via the reaction presented in Equation 2.

Manganese is selectively recovered from the pregnant leach solution 502 and the manganese-free raffinate 767 is directed to a holding tank for further processing.

The loaded extractant 775 is directed to a scrubbing stage 770. In scrubbing stage 770, the loaded extractant 775 is contacted with a portion of a scrub solution 776. The manganese in the scrub solution 776 preferentially loads onto the loaded extractant 775 and displaces some impurity elements loaded onto the loaded extractant 775 in the extraction stage 769.

In one embodiment of the present invention, the scrubbing stage comprises one or more mixer settlers.

In the embodiment shown in Figure 7a, the scrubbing stage 770 comprises a single mixer-settler.

The aqueous phase from the scrubbing stage 770 is directed back to the first extraction mixer-settler. Loaded extractant 777 from the scrubbing stage 770 advances to a stripping stage 771. In the stripping stage 771, the loaded extractant 777 is contacted with an acidic strip solution 778 to displace the majority of manganese ions on the organic (in a reversal of the extraction reaction detailed in Equation 5) into the aqueous phase, producing the manganese strip liquor 772. Sufficient water 779 is added in the stripping stage 771 to prevent the crystallisation of salts in the manganese strip liquor 772.

The manganese strip liquor 772 is directed to the manganese crystallisation stage 780.

In one embodiment, the stripping stage 771 comprises one or more mixer settlers. Preferably, the stripping stage 771 comprises two or more mixer settlers.

In an embodiment where the stripping stage 771 comprises two or more mixer settlers, the two or more mixer settlers are arranged in series.

The organic phase 773 exiting the stripping stage 771 is recycled to the extraction stage 769 where it again loads with manganese. In this way the organic phase 781 is kept in a closed circuit within the manganese solvent extraction circuit 766.

The manganese strip liquor 772 from the stripping stage 771 is directed to a manganese crystallization stage 780. In the manganese crystallization stage 780, water is removed from the manganese strip liquor 772 to cause the crystallisation of MnSO₄.H₂O in a slurry 782.

In one form of the present invention, the manganese crystallization stage comprises a crystallisation unit. Preferably, the crystallisation unit is an evaporative crystalliser.

The slurry 782 from the manganese crystallization stage 780 is passed to a filtration stage 783. In the filtration stage 783, manganese sulfate solids 784 are separated from filtrate. Water 785 is used in the filtration stage 783 to wash the filter cake and maximise recovery of manganese. The filtrate is recycled back to the stripping stage 771 or the manganese crystallization stage 780 to supplement water being used and to maximise the recovery of manganese. A portion of the filtrate may also be recycled for use in the manganese scrubbing stage 769.

The cobalt solvent extraction circuit 768 comprises an extraction stage 785, a scrubbing stage 786 and a stripping stage 787 to selectively recover cobalt from the manganese free raffinate 767 into a cobalt strip liquor 788. The cobalt-free raffinate 506 is directed to a holding tank for further processing.

In one embodiment of the present invention, the extraction stage 785 comprises one or more solvent extraction mixer settlers. More preferably, the extraction stage 785 comprises two or more solvent extraction mixer settlers. Still preferably, the extraction stage 785 comprises three or more solvent extraction mixer settlers.

In one embodiment, where the extraction phase 785 comprises two or more solvent extraction mixer settlers, the two or more solvent extraction mixer settlers are arranged in series.

In one embodiment, where the extraction stage 785 comprises two or more solvent extraction mixer settlers arranged in series, the mixer settlers are arranged for counter-current operation.

In the embodiment shown in Figure 7a, the extraction stage 785 comprises four solvent extraction mixer settlers arranged in series. It is envisaged by the inventors that one or more mixer settlers may be used. The manganese free raffinate 767 is directed to the first mixer settler where it is contacted with a cobalt extractant 789 to selectively extract cobalt from the manganese free raffinate 767.

In a preferred form of the present invention, the cobalt extractant 789 is an organic extractant. More preferably, the cobalt extractant 789 is a phosphinic acid type organic extractant. Still preferably, the cobalt extractant 789 is Cyanex272.

The generic extraction reaction is presented in Equation 3 below:

*6RH* + *X₂(SO₄)₃* = *2XR₃* + *3H₂SO₄ (where X = Al⁺³ , Fe⁺³)* (3)

The manganese free raffinate 767 and the cobalt extractant 789 are contacted in a counter-current arrangement to maximize extraction efficiency. Ammonia solution 790 is dosed to each of the mixer-settlers to maintain a target pH by neutralizing sulphuric acid via the reaction presented in Equation 2.

Cobalt is selectively recovered from the manganese free raffinate 767 and the cobalt-free raffinate 767 is directed to a holding tank for further processing.

The loaded extractant 791 is directed to a scrubbing stage 786. In scrubbing stage 786, the loaded extractant 791 is contacted with a portion of a scrub solution 792. The scrub solution 792 will act to displace some impurity elements loaded onto the loaded extractant 791 in the extraction stage 785.

In one embodiment of the present invention, the scrubbing stage comprises one or more mixer settlers.

In the embodiment shown in Figure 7a, the scrubbing stage 786 comprises a single mixer-settler.

The aqueous phase from the scrubbing stage 786 is directed back to the first extraction mixer-settler. Loaded extractant 793 from the scrubbing stage 786 advances to a stripping stage 787. In the stripping stage 787, the loaded extractant 793 is contacted with an acidic strip solution 794 to displace the majority of cobalt ions on the organic (in a reversal of the extraction reaction detailed in Equation 3) into the aqueous phase, producing the cobalt strip liquor 788. Sufficient water 795 is added in the stripping stage 787 to prevent the crystallisation of salts in the cobalt strip liquor 788.

The cobalt strip liquor 788 is directed to the cobalt crystallisation stage 796.

In one embodiment, the stripping stage 787 comprises one or more mixer settlers. Preferably, the stripping stage 787 comprises two or more mixer settlers.

In an embodiment where the stripping stage 787 comprises two or more mixer settlers, the two or more mixer settlers are arranged in series.

The organic phase 789 exiting the stripping stage 787 is recycled to the extraction stage 785 where it again loads with cobalt. In this way the organic phase 789 is kept in a closed circuit within the cobalt solvent extraction circuit 768.

The cobalt strip liquor 788 from the stripping stage 787 is directed to a cobalt crystallization stage 796. In the cobalt crystallization stage 796, water is removed from the cobalt strip liquor 788 to cause the crystallisation of CoSO₄.7H₂O in a slurry 798.

In one form of the present invention, the cobalt crystallization stage 796 comprises a crystallisation unit. Preferably, the crystallisation unit is an evaporative crystalliser.

The slurry 798 from the cobalt crystallization stage 796 is passed to a filtration stage 799. In the filtration stage 799, cobalt sulfate solids 7701 are separated from filtrate. Water is used in the filtration stage 799 to wash the filter cake and maximise recovery of cobalt. The filtrate is recycled back to the cobalt crystallization stage 796 to maximise the recovery of cobalt. A portion of the filtrate may also be recycled for use in the cobalt scrubbing stage 785 or recycled upstream of the cobalt solvent extraction circuit.

### Manganese Solvent Extraction Circuit Conditions

In one form of the present invention, the manganese extractant is diluted to a target concentration with a diluent. Preferably, the target concentration is between 15% and 35% on a volume basis. More preferably, the target concentration is about 30% on a volume basis. As would be appreciated by a person skilled in the art the dilution of the manganese extractant is used to control viscosity.

In forms of the invention, where the manganese extractant is diluted with a diluent, the diluent is Shellsol2046. Other diluents knowns to those in the art may alternatively be used, for example, Exsol D80.

Preferably, the target pH of the pregnant leach solution in the extraction stage is between 3 and 4.5. More preferably, the target pH of the pregnant leach solution in the extraction stage is 3.5.

In a preferred form of the present invention, the ratio of organic to aqueous in the extraction stage is 1.65:1. As would be appreciated by a person skilled in the art, the ratio of organic to aqueous in the extraction stage is dependent on the manganese tenor in the pregnant leach solution as well as the loading of manganese on the organic. One method for calculation of equilibrium concentration of extractant is using the material balance, i.e. it is equal to the difference between total (analytical) concentration of extractant and the sum of all solvated species in the solvent phase.

In one form of the present invention, the ratio of the manganese loaded extractant to the scrub solution is between 20:1 and 100:1 (organic:aqueous) on a volume basis. Preferably the ratio is between 30:1 and 70:1 (organic:aqueous) on a volume basis. More preferably, the ratio is about 50:1 (organic:aqueous) on a volume basis..

In one form of the present invention, the acidic strip solution comprises sulphuric acid.

In one form of the present invention, the loaded extractant is contacted with sufficient acidic strip solution to achieve a target pH in the manganese strip liquor. Preferably, the target pH is below 3.

In one form of the present invention, water is added to the stripping stage to reach a target concentration of manganese in the manganese strip liquor. Preferably the target concentration is between 100 g/L and 220 g/L.

### Cobalt Solvent Extraction Circuit Conditions

In one form of the present invention, the cobalt extractant is diluted to a target concentration with a diluent. Preferably, the target concentration is between 15% and 35% on a volume basis. More preferably, the target concentration is about 30% on a volume basis. As would be appreciated by a person skilled in the art the dilution of the cobalt extractant is used to control viscosity.

In forms of the invention, where the cobalt extractant is diluted with a diluent, the diluent is Shellsol2046.

In a preferred form of the present invention, the ratio of organic to aqueous in the extraction stage is 3.1:1. As would be appreciated by a person skilled in the art, the ratio of organic to aqueous in the extraction stage is dependent on the cobalt / manganese tenor in the pregnant leach solution as well as the loading of cobalt / manganese on the organic. One method for calculation of equilibrium concentration of extractant is using the material balance, i.e. it is equal to the difference between total (analytical) concentration of extractant and the sum of all solvated species in the solvent phase.

Preferably, the target pH of the pregnant leach solution in the extraction stage is between 4.2 and 5. More preferably, the target pH of the pregnant leach solution in the extraction stage is 4.8.

In one form of the present invention, the ratio of the cobalt loaded extractant to the scrub solution is between 20:1 and 100:1 (organic:aqueous) on a volume basis. Preferably the ratio is between 30:1 and 70:1 (organic:aqueous) on a volume basis. More preferably, the ratio is about 50:1 (organic:aqueous) on a volume basis.

In one form of the present invention, the acidic strip solution comprises sulphuric acid.

In one form of the present invention, the loaded extractant is contacted with sufficient acidic strip solution to achieve a target pH in the cobalt strip liquor. Preferably, the target pH is below 3.

In one form of the present invention, water is added to the stripping stage to reach a target concentration of cobalt in the cobalt strip liquor. Preferably the target concentration is between 80 g/L and 140 g/L.

### Nickel Solvent Extraction Circuit

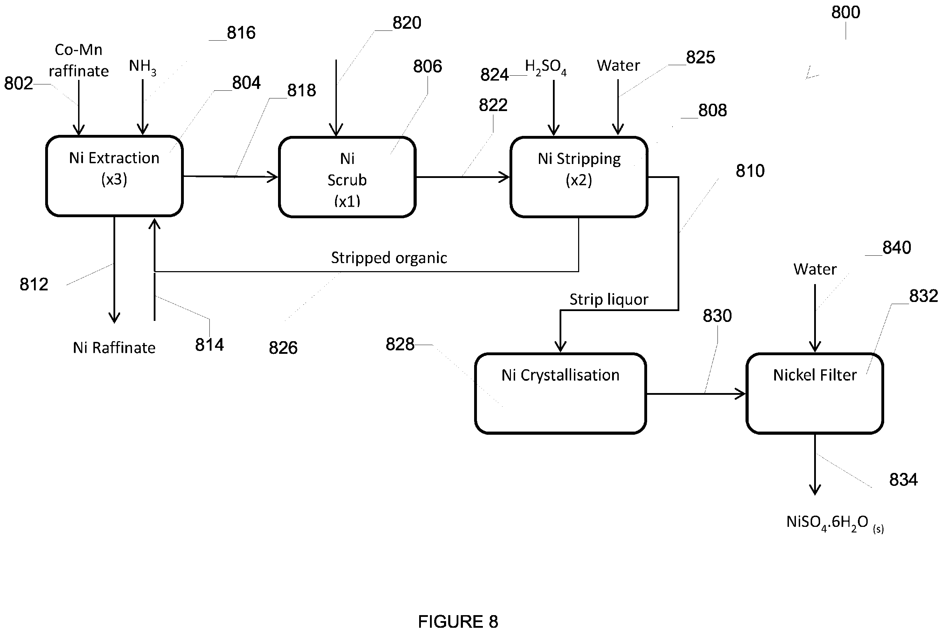

Following the step of separating the pregnant leach solution and the solid residue, and preferably after the copper, aluminium, and cobalt/manganese extraction steps, the pregnant leach solution is passed to a nickel solvent extraction circuit to recover nickel. Figure 8 shows a flowsheet of a nickel solvent extraction circuit 800 in accordance with one embodiment of the present invention. Pregnant leach solution 802 from the cobalt / manganese solvent extraction circuit is directed to the nickel solvent extraction circuit 800. In the embodiment shown in the Figure 8, the nickel solvent extraction circuit 800 comprises an extraction stage 804, a scrubbing stage 806 and a stripping stage 808 to selectively recover nickel from the pregnant leach solution 802 into a nickel strip liquor 810. The Ni-free raffinate 812, now largely free of other metals, is directed to a holding tank for further processing.

In one embodiment of the present invention, the extraction stage comprises one or more solvent extraction mixer settlers. More preferably, the extraction stage comprises two or more solvent extraction mixer settlers arranged in series.

In an embodiment, where the extraction stage comprises two or more solvent extraction mixer settlers arranged in series, the mixer settlers are arranged for counter-current operation.

In the embodiment shown in Figure 8, the extraction stage 804 comprises three solvent extraction mixer settlers arranged in series. It is envisaged by the inventors that one or more mixer settlers may be used. The pregnant leach solution 802 is directed to the first mixer settler where it is contacted with a nickel extractant 814 to selectively extract nickel from the pregnant leach solution 802.

In a preferred form of the present invention, the nickel extractant is an organic extractant. More preferably, the nickel extractant is an oxime. Still preferably the nickel extractant is LIX84I. Alternatively, the nickel extractant is a carboxylic acid, such as Versatic 10.

The generic extraction reaction is presented in Equation 7 below:

*2RH + NiSO₄ = NiR₂ + H₂SO₄* (7)

The pregnant leach solution 802 and the nickel extractant 814 are contacted in a counter-current arrangement to maximize extraction efficiency. Ammonia solution 816 is dosed to each of the mixer-settlers to maintain a target pH by neutralizing sulphuric acid via the reaction presented in Equation 2.

Nickel is selectively recovered from the pregnant leach solution 802 and the Ni-free raffinate 812 is directed to a holding tank for further processing.

The loaded extractant 818 is directed to a scrubbing stage 806. In scrubbing stage 806, the nickel loaded extractant 818 is contacted with a portion of a scrub solution 820 containing nickel ions. The nickel ions in the scrub solution 820 preferentially loads onto the loaded extractant 818 and displaces any impurity elements loaded onto the loaded extractant 318 in the extraction stage 804.

In one embodiment of the present invention, the scrubbing stage comprises one or more mixer settlers.

In the embodiment shown in the Figure 8, the scrubbing stage comprises a single mixer-settler.

The aqueous phase from the scrubbing stage 806 is directed back to the first extraction mixer-settler. Loaded extractant 822 from the scrubbing stage 806 advances to a stripping stage 808. In the stripping stage 808, the loaded extractant 820 is contacted with an acidic strip solution 824 to displace the majority of nickel ions on the organic (in a reversal of the extraction reaction detailed in Equation 7) into the aqueous phase, producing the nickel strip liquor 810. Sufficient water 825 is added in the stripping stage 808 to prevent the crystallisation of salts in the nickel strip liquor 810.

In one embodiment, the stripping stage 808 comprises one or more mixer settlers. Preferably, the stripping stage 808 comprises two or more mixer settlers.

In an embodiment where the stripping stage 808 comprises two or more mixer settlers, the two or more mixer settlers are arranged in series.

The organic phase 826 exiting the stripping stage 808 is recycled to the extraction stage 804 where it again loads with nickel. In this way the organic phase 826 is kept in a closed circuit within the nickel solvent extraction circuit 800.

The nickel strip liquor 810 from the stripping stage 808 is directed to a nickel crystallization stage 828.

In the nickel crystallization stage 828, water is removed from the nickel strip liquor 810 to cause the crystallisation of NiSO₄.6H₂O in a slurry 830.

In one form of the present invention, the nickel crystallization stage 828 comprises a crystallisation unit. Preferably, the crystallisation unit is an evaporative crystalliser.

The slurry 830 from the nickel crystallization stage 828 is passed to a filtration stage 832. In the filtration stage 832, nickel sulfate solids 834 are separated from filtrate. Water 840 is used in the filtration stage 832 to wash the filter cake and maximise recovery of nickel. The filtrate is recycled back to the nickel crystallization stage 828 to maximise the recovery of nickel. A portion of the 836 is recycled for use in the scrubbing stage 806. Nickel sulfate solids 834 are transported a nickel sulfate product stockpile.

### Nickel Solvent Extraction Circuit Conditions

In one form of the present invention, the nickel extractant is diluted to a target concentration with a diluent. Preferably, the target concentration is between 5% and 35% on a volume basis. More preferably, the target concentration is about 10% on a volume basis. As would be appreciated by a person skilled in the art the dilution of the nickel extractant is used to control viscosity.

In forms of the invention, where the nickel extractant is diluted with a diluent, the diluent is Shellsol2046.

In a preferred form of the present invention, the ratio of organic to aqueous in the extraction stage is 3.55:1. As would be appreciated by a person skilled in the art, the ratio of organic to aqueous in the extraction stage is dependent on the nickel tenor in the pregnant leach solution as well as the loading of nickel on the organic. One method for calculation of equilibrium concentration of extractant is using the material balance, i.e. it is equal to the difference between total (analytical) concentration of extractant and the sum of all solvated species in the solvent phase.

Preferably, the target pH of the pregnant leach solution in the extraction stage is at least 6.4. More preferably, the target pH of the pregnant leach solution in the extraction stage is between 5 and 7.

In one form of the present invention, the ratio of the nickel loaded extractant to the scrub solution is between 20:1 and 100:1 (organic:aqueous) on a volume basis. Preferably the ratio is between 30:1 and 70:1 (organic:aqueous) on a volume basis. More preferably, the ratio is about 50:1 (organic:aqueous) on a volume basis.

In one form of the present invention, the acidic strip solution comprises sulphuric acid.

In one form of the present invention, the loaded extractant is contacted with sufficient acidic strip solution to achieve a target pH in the manganese strip liquor. Preferably, the target pH is below 4.

In one form of the present invention, water is added to the stripping stage to reach a target concentration of nickel in the manganese strip liquor. Preferably the target concentration is 50 g/L and 120 g/L.

### Lithium Recovery Circuit

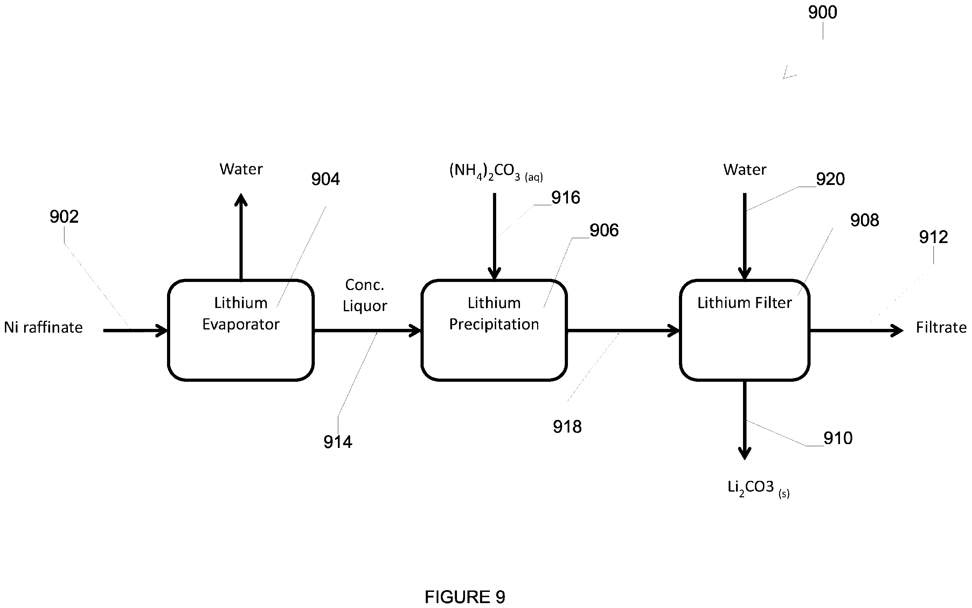

Following the step of separating the pregnant leach solution and the solid residue, and preferably after the copper, aluminium, cobalt/manganese and nickel extraction steps, the pregnant leach solution is passed to a lithium recovery circuit to recover lithium. Figure 9 shows a flowsheet of a lithium solvent extraction circuit 900 in accordance with one embodiment of the present invention. Pregnant leach solution 902 from the nickel solvent extraction circuit is directed to the lithium solvent extraction circuit 900. In the embodiment shown in the Figure 9, the lithium solvent extraction circuit 900 comprises an evaporation stage 904, a precipitation stage 906 and a filtration stage 908 to selectively recover lithium from the pregnant leach solution 902 into a lithium solid 910. The Li-free filtrate 912, now largely free of metals, is directed to a holding tank for further processing.

Pregnant leach solution 902 is directed to an evaporation stage 904 where water is removed from the pregnant leach solution 902 to produce a concentrated lithium liquor 914. Water removal is targeted to maximize the concentration of lithium in concentrated lithium liquor 914 to just below the solubility limit of salts in the concentrated lithium liquor 914.

In one form of the present invention, the evaporation stage 904 comprises an evaporator unit. Preferably, the evaporator unit is a falling film type evaporator. Energy is input through the use of steam in an indirect heat exchanger. Evaporation is conducted at high temperature and moderate vacuum to assist in the efficient removal of water.

Concentrated lithium liquor 914 is directed to the precipitation stage 906 where it is contacted with ammonium carbonate 916 to precipitate lithium carbonate in a lithium carbonate slurry 918. The precipitation of lithium carbonate occurs in accordance with the reaction in Equation 8.

*Li₂SO_{4 (aq)}* + *(NH₄)₂CO_{3 (aq)} = Li₂CO_{3 (s)} + (NH₄)₂SO_{4 (aq)}* *(8)*

Preferably, the precipitation stage comprises one or more reaction vessels.

Preferably, the lithium carbonate slurry 918 is maintained at an elevated temperature. It is understood by the inventors that by conducting the precipitation step at elevated temperatures, the precipitation efficiency is maximized by taking advantage of the inverse temperature-solubility profile of lithium carbonate.

The lithium carbonate slurry 918 is passed to the filtration stage 908 to separate lithium carbonate solid 910 from the lithium carbonate slurry 918.

Preferably, the filtration stage comprises a solid liquid separation device. More preferably, the solid liquid separation device is a centrifuge.

Fresh water 920 is used in the filtration stage 908 to wash the cake and maximise removal of entrained liquor in the filter cake. The Li-free filtrate 912, comprising ammonia is directed to a holding tank for further processing.

A precipitation stage 906 and a filtration stage 908 to selectively recover lithium from the pregnant leach solution 902 into a lithium solid 910. The Li-free filtrate 912, now largely free of metals, is directed to a holding tank for further processing.

### Lithium Recovery Circuit Conditions

In a preferred form of the invention, the concentration of lithium in the concentrated lithium liquor is targeted at 300 g/L Li₂SO₄.

Preferably, the lithium carbonate slurry is maintained at a temperature of at least 90°C.

### Alternative Lithium Recovery Means

It is envisaged that other means for lithium recovery may be used. Suitable means available to those skilled in the art include precipitation of other lithium compounds, solvent extraction, ion exchange and electrolysis.

### Lithium Solvent Extraction

Where solvent extraction is used to recover lithium, the pregnant leach solution may be contacted with a lithium extractant to recover lithium. It is envisaged that the lithium extraction circuit would comprise an extraction stage, a scrubbing stage and a stripping stage to selectively recover lithium from the pregnant leach solution into a lithium strip liquor.

In one form of the present invention, the pregnant leach solution is subjected to an impurity removal step prior to the lithium solvent extraction step. It is envisaged that the pregnant leach solution may contain impurities such as Ca, Mg, K, Na, and possibly other alkali metals and alkaline earth metals. These impurities are preferably removed to prevent them from loading into the lithium extractant. In one form of the present invention, the pregnant leach solution is subjected to an ion exchange step to remove any multivalent ions from the pregnant leach solution. A number of suitable exchange resins are available to those skilled in the art, including Dowex G26 resin. Alternatively, these impurities may be precipitated out of pregnant leach solution.

It is envisaged that a number of commercially available extractants are available for the recover lithium from the pregnant leach solution. In a preferred form of the present invention, the lithium extractant is an organic extractant. In one embodiment, the lithium extractant comprises a phosphorous based organic extractant. Preferably, the lithium extractant is selected from Cyanex 936, Cyanex 923 and Cyanex 926. In one embodiment, the lithium extractant comprises an oxime. Preferably, the oxime is selected from LIX 54, Mextral 54-100 and LIX 55. In one embodiment, the lithium extractant comprises a mixture of two of more phosphorous based organic extractants and oxime extractants.

Ammonia solution is dosed to each of the mixer-settlers to maintain a target pH. Preferably, the target pH is above 9. Still preferably, the target pH is between 9 and 11.

Preferably the stripping stage comprises the contact of the loaded organic extractant with an acidic strip solution. In one form of the present invention, the acidic strip solution comprises sulphuric acid. In an alternative form of the present invention, the acid strip solution is hydrochloric acid. The use of hydrochloric acid will result in a lithium chloride strip liquor. It is envisaged that LiCl may be crystallised from this strip liquor.

Other known processes to recover lithium from the leach solution by way of solvent extract processes know to those skilled in the art may be used without deviating from the scope of the present invention.

### Lithium Ion Exchange

Where ion exchange is used to recover lithium from the pregnant leach solution, it is envisaged that the method will comprise the step of contacting the pregnant leach solution with an ion exchange resin to selectively recover lithium from the pregnant leach solution. The method will further comprise the contact of the loaded ion exchange resin with a strip solution to recover lithium in a lithium strip solution.

### Lithium Electrolysis

Where lithium is recovered from the leach solution by way of electrolysis it envisaged that the method will comprise the step of directing the pregnant leach solution to an electrolytic cell to recover lithium. Preferably, the pregnant leach solution is subjected to an impurity removal step to remove dissolved metal species. These metal species include, for example, Ca, Mg, and other transition metal ions.

In one form of the present invention, lithium is recovered in the electrolytic cell as lithium hydroxide. Preferably, the electrolytic cell is an electrodialysis (membrane) cell or a two compartment electrolytic cell. In one embodiment, the pH of the pregnant leach solution is maintained between 9.5 and 12.5 in the electrolytic cell.

In one form of the present invention, lithium is recovered in the electrolytic cell as lithium metal. Preferably, the electrolytic cell is a fused salt electrolytic cell. More preferably, the cell matrix is a chloride salt.

Other electrolytic processes available to those skilled in the art to recover lithium or lithium products from the leach solution may be used without deviating from the scope of present invention.

### Lithium Compound Precipitation

It is envisaged that lithium products may be precipitated and separated from the pregnant leach solution by the addition of a precipitant.

In one embodiment of the present invention, the precipitant is a carbonate, for example sodium carbonate. As would be appreciated by a person skilled in the art, the addition of a carbonate will precipitate lithium carbonate. The recovered precipitate may also be forwarded to a purification circuit to remove impurities. In one form of the present invention, a lithium phosphate solid may be precipitated from the leach solution. Preferably, a phosphate material is added to the leach solution to precipitate lithium phosphate. More preferably, the phosphate material is lithium phosphate.

Other means for precipitating and recovering lithium products known to those skilled in the art may be used without deviating from the scope of the present invention.

### Ammonium Sulfate Recovery Circuit

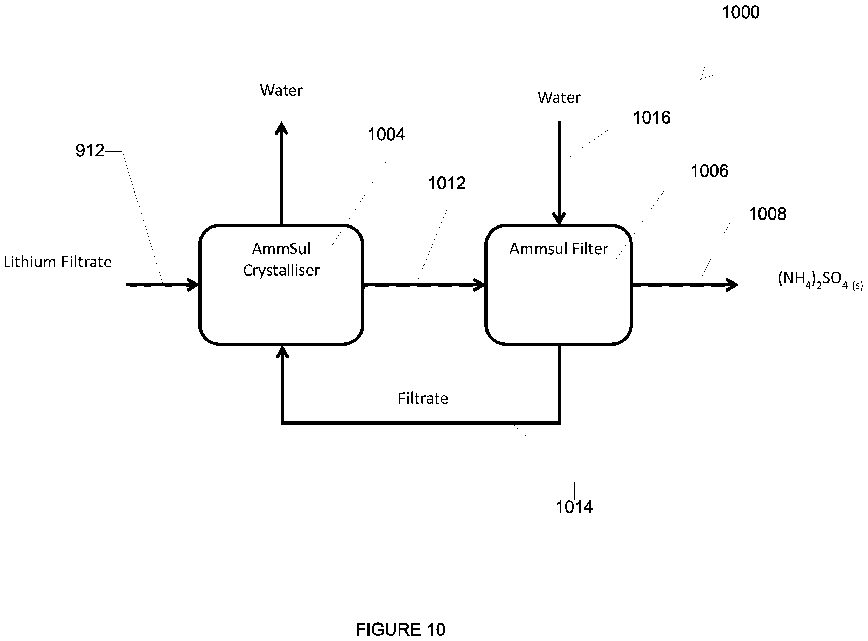

The separation of lithium from the pregnant leach solution produces a filtrate comprising ammonia. This ammonia is recovered as ammonium sulfate in the ammonium sulfate recovery circuit. Figure 10 shows a flowsheet of an ammonium sulfate recovery circuit 1000 in accordance with one embodiment of the present invention. Filtrate 902 from the lithium recovery circuit is directed to the ammonium sulfate recovery circuit 1000. In the embodiment shown in the Figure 10, the ammonium sulfate recovery circuit 1000 comprises a crystallisation stage 1004 and a filtration stage 1006 to selectively recover ammonium sulfate from the pregnant leach solution 902 into an ammonium sulfate solid 1008.

The filtrate 902 is directed to the crystallisation stage 1004. In the crystallisation stage 1004, water is removed from the filtrate 902 to cause the crystallisation of ammonia as ammonium sulfate (NH₄)₂SO₄ in a slurry 1012. Water removal is targeted to maximize recovery of ammonium sulfate as a solid. Any compounds still remaining in the lithium filtrate (i.e NiSO₄, Li₂CO₃ etc) will co-crystallise as impurities.

In one form of the present invention, the ammonium sulfate crystallization stage 1004 comprises a crystallisation unit. Preferably, the crystallisation unit is an evaporative crystalliser. Still preferably, the evaporative crystalliser is a forced circulation type evaporative crystalliser.

The slurry 1012 from the crystallisation stage 1004 is passed to a filtration stage 1006. In the filtration stage 1006, the precipitated ammonium sulfate solids are separated from filtrate 1014. Water 1016 is used in the filtration stage 1006 to wash the filter cake and maximise recovery of ammonium sulfate. The filtrate 1014 is recycled back to the crystallisation stage 1004 to maximise the recovery of ammonium sulfate. The recovered ammonium sulfate solid 1008 is discharged from the filter press and passed to an ammonium sulfate product stockpile.

### Example 1

A Li-ion laptop battery was disassembled and an assay of the materials is shown in Table 1.

**Table 1: Battery Assay**

| **SAMPLE** | **Mass (kg)** | **Yield (%)** |
|---|---|---|
| Total | 7.468 | 100.00% |
| Fraction | | |
| Plastic Waste Fraction | 0.788 | 10.56% |
| Battery Cell Fraction | 6.459 | 86.48% |
| Circuitry Fraction | 0.221 | 2.96% |

An analysis of the chemical assay of the battery was performed and the results are shown in Table 2.

**Table 2: Chemical Analysis**

| **SAMPLE** | **Li₂O** | **CoO** | **Fe₂O₃** | **Al₂O₃** | **SiO₂** | **TiO₂** | **Mn** | **S** | **P** | **SnO₂** |
|---|---|---|---|---|---|---|---|---|---|---|
| | ppm | ppm | ppm | ppm | ppm | ppm | ppm | ppm | ppm | ppm |
| **Assay Head** | 56405 | 268790 | 240620 | 101390 | 550 | 120 | 605 | 970 | 2250 | 5.0 |

| **SAMPLE** | **Ta₂O₅** | **Nb₂O₅** | **Na₂O** | **PbO** | **CaO** | **MgO** | **K₂O** | **NiO** | **CuO** | **Rb** |
|---|---|---|---|---|---|---|---|---|---|---|
| | ppm | ppm | ppm | ppm | ppm | ppm | ppm | ppm | ppm | ppm |
| **Assay Head** | <0.5 | 5 | <5 | 96 | 1255 | 910 | <5 | 19771 | 124766 | <0.5 |

### Example 2

Three separate leaches were undertaken on samples of the battery of Example 1 to analyse the effect that different leach conditions had on the dissolution of metals in the battery.

The battery sample was subjected to a H₂SO₄ leach with SO₂ gas sparged through the leach vessel. The leach parameters are shown in Table 3.

**Table 3: Leach Parameters**

| | | |
|---|---|---|
| **Size:** | 10mm | P100 |
| **Start Mass:** | 57.1 | g |
| **Pulp Density:** | 20.0 | % (w/w) |
| **H2SO4 Conc:** | 30 | % (w/w) |
| **Leach Time:** | 2.0 | hours |
| **Leach Temp:** | 100 | °C |
| **Sparge rate (SO2)** | 0.02 | L/min |

The leach results are shown in Table 4 and Table 5.

**Table 4: Leach Results**

| **Solid** | **Mass** | **Li** | **Co** | **Fe** | **Al** | **Ni** | **Cu** |
|---|---|---|---|---|---|---|---|
| | g | ppm | ppm | ppm | ppm | ppm | ppm |
| **Leach Residue** | 74.74 | 7269 | 147122 | 635 | 10795 | 5210 | 70767 |

| **Solution** | **Volume** | **Li** | **Co** | **Fe** | **Al** | **Ni** | **Cu** |
|---|---|---|---|---|---|---|---|
| | mL | mg/L | mg/L | mg/L | mg/L | mg/L | mg/L |
| **Leach Liquor** | 24.52957 | 19460 | 27730 | 30 | 27570 | 2760 | 18080 |
| **Wash** | 249.1459 | 3382 | 12098 | 24 | 4732 | 585 | 3793 |
| **Calc Head.** | 57.14 | 32608.36 | 257092.6 | 948.1149 | 46588.33 | 10550.36 | 116864.4 |

**Table 5: Leach Distribution**

| **Solid** | **Mass** | **Li** | **Co** | **Fe** | **Al** | **Ni** | **Cu** |
|---|---|---|---|---|---|---|---|
| | g | dist. | dist. | dist. | dist. | dist. | dist. |
| **Leach Residue** | 74.74 | 0.291581 | 0.748516 | 0.876043 | 0.303081 | 0.645927 | 0.792066 |

| **Solution** | **Volume** | **Li** | **Co** | **Fe** | **Al** | **Ni** | **Cu** |
|---|---|---|---|---|---|---|---|
| | mL | dist. | dist. | dist. | dist. | dist. | dist. |
| **Leach Liquor** | 24.52957 | 0.256191 | 0.046303 | 0.013583 | 0.254044 | 0.112303 | 0.066415 |
| **Wash** | 249.1459 | 0.452229 | 0.205181 | 0.110373 | 0.442875 | 0.24177 | 0.141519 |
| **Calc Head.** | 57.14 | 1 | 1 | 1 | 1 | 1 | 1 |

The battery sample was subjected to a H₂SO₄ leach. The leach parameters are shown in Table 6.

**Table 6: Leach Parameters**

| | | |
|---|---|---|
| **Size:** | 10mm | P100 |
| **Start Mass:** | 47.6 | g |
| **Pulp Density:** | 12.5 | % (w/w) |
| **H2SO4 Conc:** | 20 | % (w/w) |
| **Leach Time:** | 4.0 | hours |
| **Leach Temp:** | 100 | °C |

The leach results are shown in Table 7 and Table 8.

**Table 7: Leach Results**

| **Solid** | **Mass** | **Li** | **Co** | **Fe** | **Al** | **Ni** | **Cu** |
|---|---|---|---|---|---|---|---|
| | g | ppm | ppm | ppm | ppm | ppm | ppm |
| **Leach Residue** | 13.42 | 40 | 499 | 40 | 885 | 125 | 551 |

| **Solution** | **Volume** | **Li** | **Co** | **Fe** | **Al** | **Ni** | **Cu** |
|---|---|---|---|---|---|---|---|
| | mL | mg/L | mg/L | mg/L | mg/L | mg/L | mg/L |
| **Leach Liquor** | 195.0 | 6152 | 47095 | 141 | 7662 | 1292 | 18149 |
| **T=120 Min S/S** | 15.2 | 6062 | 46574 | 137 | 7562 | 1279.00 | 17740.00 |
| **Wash** | 366.7 | 463 | 3625 | 11 | 576 | 99.00 | 1413.00 |
| **Calc Head.** | 47.55 | 30750 | 236126 | 718 | 38532 | 6506 | 91154.54 |

**Table 8: Leach Distribution**

| **Solid** | **Mass** | **Li** | **Co** | **Fe** | **Al** | **Ni** | **Cu** |
|---|---|---|---|---|---|---|---|
| | g | dist. | dist. | dist. | dist. | dist. | dist. |
| **Leach Residue** | 13.4 | 0.04% | 0.06% | 1.57% | 0.65% | 0.54% | 0.17% |

| **Solution** | **Volume** | **Li** | **Co** | **Fe** | **Al** | **Ni** | **Cu** |
|---|---|---|---|---|---|---|---|
| | mL | dist. | dist. | dist. | dist. | dist. | dist. |
| **Leach Liquor** | 195.0 | 82.07% | 81.81% | 80.53% | 81.57% | 81.45% | 81.67% |
| **T=120 Min S/S** | 15.2 | 6.29% | 6.29% | 6.08% | 6.26% | 6.27% | 6.21% |
| **Wash** | 366.7 | 11.61% | 11.84% | 11.81% | 11.53% | 11.73% | 11.95% |
| **Calc Head.** | 47.55 | 100.00% | 100.00% | 100.00% | 100.00% | 100.00% | 100.00% |

The battery sample was subjected to a H₂SO₄ leach with 1 Molar hydrogen peroxide being added dropwise until ORP stabilised. The leach parameters are shown in Table 9.

**Table 9: Leach Parameters**

| | | |
|---|---|---|
| **Size:** | 10mm | P100 |
| **Start Mass:** | 51.6 | g |
| **Pulp Density:** | 20.0 | % (w/w) |
| **H2SO4 Conc:** | 30 | % (w/w) |
| **Leach Time:** | 2.0 | hours |
| **Leach Temp:** | 80 | °C |
| **Sparge rate (SO2)** | 51.6 | g |
| **ORP Maintained:** | >300 | mV (Ag/AgCl) |
| **Total 1M H2O2 added:** | 157.71 | g |

The leach results are shown in Table 10 and Table 11.

**Table 10: Leach Results**

| **Solid** | **Mass** | **Li** | **Co** | **Fe** | **Al** | **Ni** | **Cu** |
|---|---|---|---|---|---|---|---|
| | 9 | ppm | ppm | ppm | ppm | ppm | ppm |
| **Leach Residue** | 17.3 | 4037 | 65674 | 1045 | 12605 | 1271 | 66480 |

| **Solution** | **Volume** | **Li** | **Co** | **Fe** | **Al** | **Ni** | **Cu** |
|---|---|---|---|---|---|---|---|
| | mL | mg/L | mg/L | mg/L | mg/L | mg/L | mg/L |
| **Leach Liquor** | 253.0 | 5704 | 42328 | 84 | 8381 | 1362 | 16790 |
| **Wash** | 340.2 | 427 | 3670 | 6 | 652 | 109.00 | 1616.00 |
| **Calc Head. (ppm)** | 51.55 | 32163 | 253970 | 802 | 49660 | 7829 | 115366.24 |

**Table 11: Leach Distribution**

| **Solid** | **Mass** | **Li** | **Co** | **Fe** | **Al** | **Ni** | **Cu** |
|---|---|---|---|---|---|---|---|
| | 9 | dist. | dist. | dist. | dist. | dist. | dist. |
| **Leach Residue** | 17.3 | 4.21% | 8.68% | 43.70% | 8.52% | 5.45% | 19.34% |
| | | | | | | | |

| **Solution** | **Volume** | **Li** | **Co** | **Fe** | **Al** | **Ni** | **Cu** |
|---|---|---|---|---|---|---|---|
| | mL | dist. | dist. | dist. | dist. | dist. | dist. |
| **Leach Liquor** | 253.0 | 87.03% | 81.78% | 51.36% | 82.82% | 85.36% | 71.42% |
| **Wash** | 340.2 | 8.76% | 9.54% | 4.93% | 8.67% | 9.19% | 9.25% |
| **Calc Head.** | 51.55 | 100.00% | 100.00% | 100.00% | 100.00% | 100.00% | 100.00% |
| | 253.0 | 87.03% | 81.78% | 51.36% | 82.82% | 85.36% | 71.42% |

### Example 3 - Copper Recovery

A series of tests were undertaken to determine the conditions required to extract copper from a pregnant leach solution. The primary objective of copper solvent extraction was to maximise copper recovery thus providing a raffinate liquor low in copper (<10 ppm Cu).

Due to the high copper concentration in solution, a commercially available extractant with high concentration was used as the organic. 30% (v/v) LIX84I in Exxsol D80 was selected. The behaviour of LIX reagents are well known in the art, in particular the stripping characteristics.

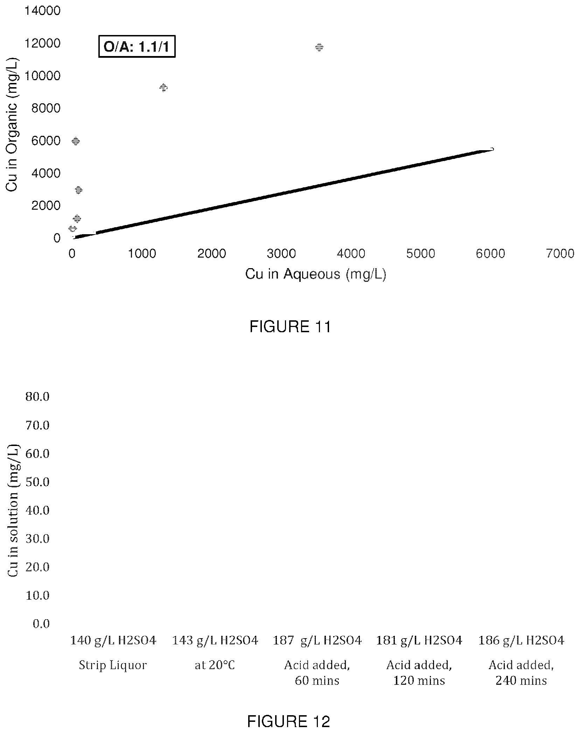

A distribution isotherm test was conducted on leach liquor generated from the leach pilot plant to determine the number of stages to extract copper. The leach liquor contained 28.3 g/L Co, 6.24 g/L Cu, 5.09 g/L Ni, 6.56 g/L Al, 1.42 g/L Fe, 4.14 g/L Li and 3.39 g/L Mn. The distribution isotherm test was conducted at pH 2.0 and 40°C to prevent ammonium alum crystallisation. The distribution isotherm and McCabe Thiele diagram are presented in Figure 11.

The results indicate that >99% Cu can be extracted in two stages at an advance O/A ratio of 1.1:1 at pH 2.0. The raffinates contained <10 ppm Cu. The results indicate excellent separation of copper from the other metals in the synthetic liquor. Minor cobalt is co-extracted, which may be problematic as cobalt does not strip effectively from the loaded solvent under the copper stripping conditions. A lower co-extraction of cobalt is expected at a lower pH. Stripping of copper from the loaded organic is a conventional process and is expected to be achievable by those skilled in the art.

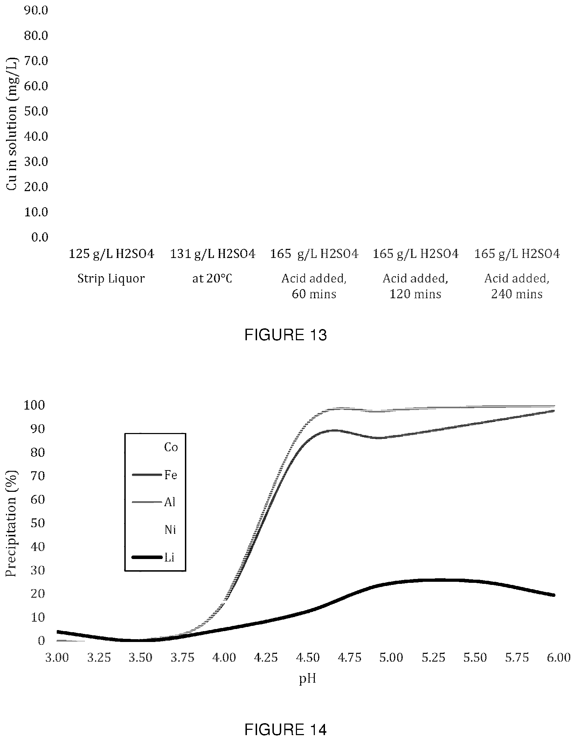

Two copper sulfate crystallization tests were conducted to determine the piloting conditions required for copper sulfate recovery. The first test used a synthetic solution containing 75 g/L Cu (as copper sulfate) and 140 g/L H₂SO₄. The second test used a synthetic solution containing 75 g/L Cu (as copper sulfate) and 125 g/L H₂SO₄. The tests liquors were cooled from 40°C to 20°C and then sulphuric acid was subsequently added to account for the sulfate contained in the copper sulfate. The results are presented in Figures 12 and 13, respectively.

For both scenarios, the copper concentration reduced by 25-30 g/L Cu, with copper crystallization being more dependent on temperature than acid concentration. The copper sulfate product was recovered by batch filtration and washing. The batches were dried at 50°C. The product contained 25.5% Cu, 27 ppm Fe, 25 ppm Al and <3 ppm Co, <6 ppm Ni and <20 ppm Li.

### Example 4

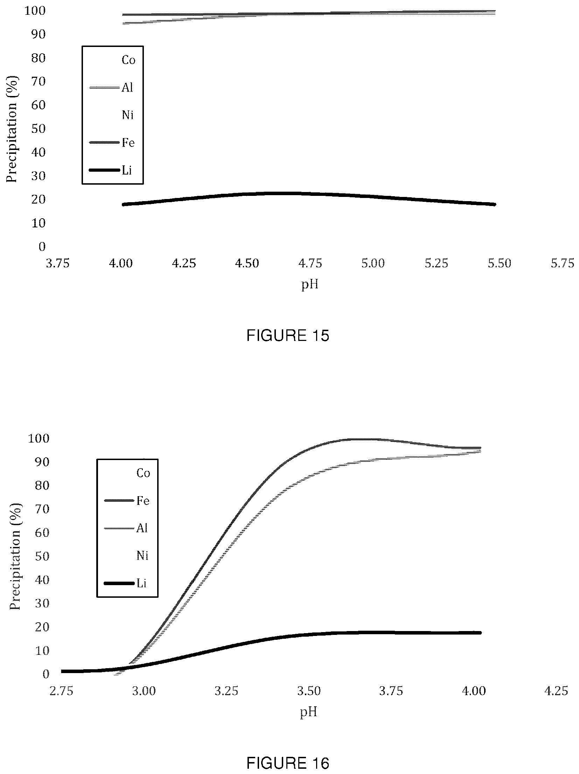

Three precipitation tests were conducted to determine the conditions required to precipitate aluminium and iron from solution while minimising the co-precipitation of cobalt, nickel and lithium. Copper raffinate, recovered from a bulk batch copper solvent extraction test was used for both tests. The liquor contained 25.2 g/L Co, 4.38 g/l Ni, 7.70 g/L Al, 1.27 g/l Fe, 3.58 g/L Li and 3.08 g/l Mn. The tests involved the initial addition of hydrogen peroxide to increase the Eh to >600 mV for iron oxidation and 28%(v/v) ammonia addition to control the pH. The tests were conducted at different temperature, 45°C, 65°C and 90°C. The results are presented in Figures 14, 15 and 16, respectively.

The results indicate that >85% iron and >90% aluminium are effectively precipitated from solution at pH >4.50. The co-precipitation of cobalt, nickel and lithium increases with increasing pH. At 45°C, the co-precipitation of cobalt is <5% at below pH 3.75 and >10% above pH 4.75.

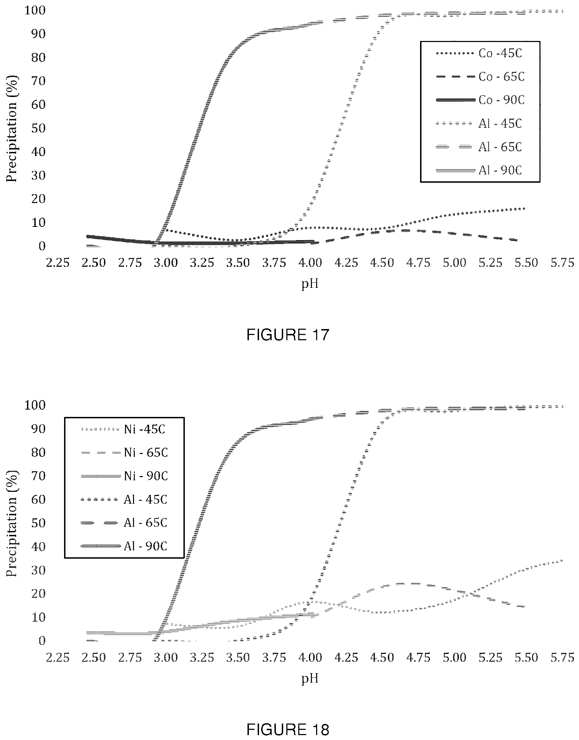

The effect of temperature on separation of aluminium from cobalt and nickel is presented in Figures 17 and 18, respectively.

The results indicate aluminium precipitation occurs at a significantly lower pH at 65°C and 90°C in comparison to 45°C. At 45°C, the pH for high aluminium precipitation must be >pH 4.50, in which the co-precipitation of cobalt is high (>8%). In comparison, at 65°C and 90°C, the aluminium precipitation efficiency was 95% at pH 4.0, while the co-precipitation of cobalt was <2%. Similar results were evident for nickel. The co-precipitation of nickel was 11% at pH 4.00 both at 65°C and 90°C. The nickel losses are higher (>20%) when targeting high aluminium precipitation efficiencies at lower temperature.

The data indicates the precipitation of iron and aluminium can be achieved with minimal cobalt losses by undertaking a counter current precipitation circuit. This may involve primary and secondary precipitation circuits including the following:
primary neutralisation (PN) circuit involves processing the copper solvent extraction raffinate at pH 3.2-4.0 at 65-90°C to precipitate the majority of iron and aluminium via the addition of hydrogen peroxide or air and ammonia solution;
the PN discharge is thickened, filtered and washed, and the residue is discarded; and
the PN liquor advances to the secondary neutralisation (SN) stage. The SN circuit processes PN liquor at a pH of 4.5-6.0 at 45-65°C to precipitate the remaining aluminium and iron via the addition of hydrogen peroxide or air and ammonia.

The SN discharge is thickened, and the thickener overflow advances to the cobalt recovery circuit. The thickener underflow is pumped up-stream to the either leach circuit, a small stand-alone leach circuit or the feed the PN circuit to recover coprecipitate cobalt, nickel and lithium.

### Example 5

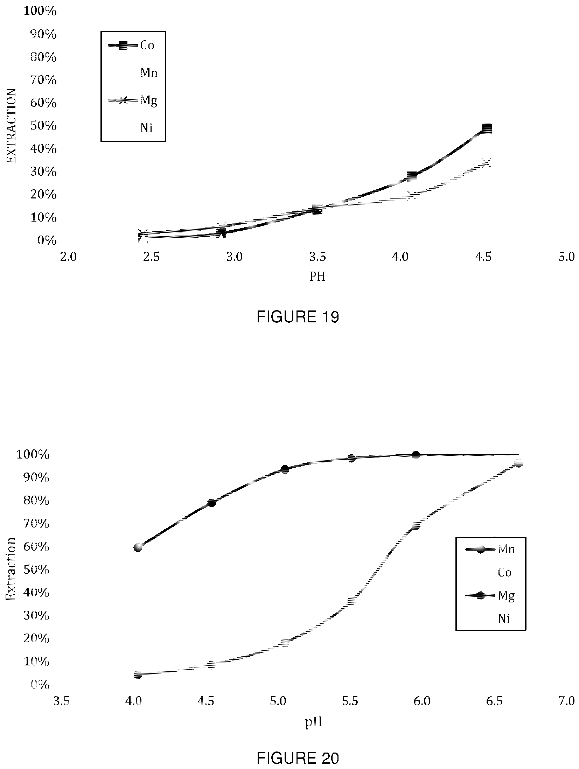

A pH isotherm was conducted on precipitation filtrate to assess the selectivity of D2EHPA for manganese / cobalt separation. The pH isotherm was prepared using an organic containing 15% D2EHPA in Exxsol D80 at an O/A ratio of 1:1. The isotherm is presented in Figure 19.

The pH isotherm indicates manganese is extracted more selectively from cobalt using D2EHPA. At pH 3.5 the manganese extraction is 75% and the cobalt extraction is 12%.

A pH isotherm test was conducted on precipitation filtrate to assess the selectivity of Cyanex 272 for manganese + cobalt / nickel separation. The pH isotherm was prepared using an organic containing 30% Cyanex 272 in Exxsol D80 at an O/A ratio of 3:1. The isotherm is presented in Figure 20.

The pH isotherm indicates manganese and cobalt is extracted more selectively from nickel and magnesium using Cyanex 272. At pH 5.0 the manganese and cobalt extractions are 92% and 78%, respectively, while the magnesium and nickel extractions are only 19% and <1%, respectively.

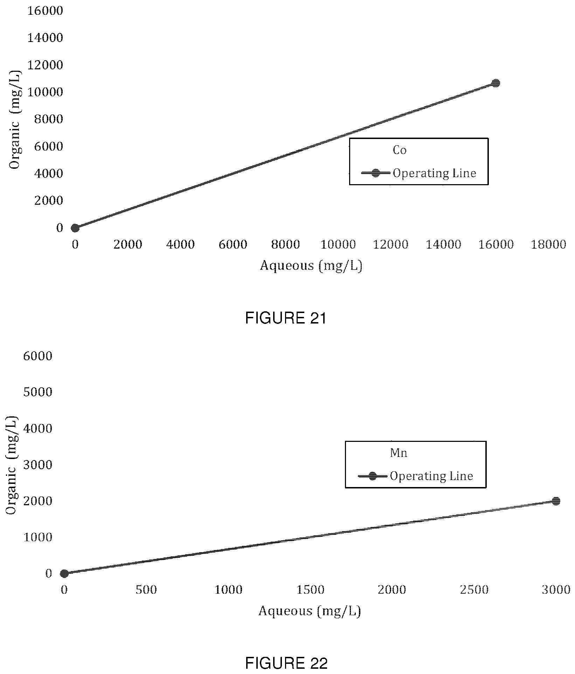

A distribution isotherm test was conducted on precipitation filtrate to assess the number of stages required to extract manganese and cobalt from solution. The test was conducted using 30% Cyanex 272 in Exxsol D80 at pH 4.80. The isotherms for cobalt and manganese are presented in Figures 21 and 22, respectively.

The isotherms are steep and indicate high cobalt and manganese extractions in 3-4 stages.

### Example 6

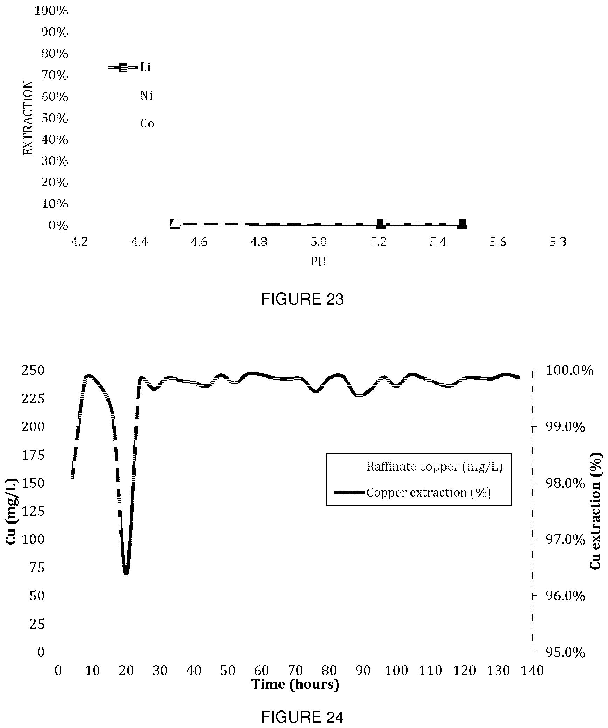

A pH isotherm was conducted on cobalt solvent extraction raffinate to assess the selectivity of LIX84I for nickel / lithium separation. The pH isotherm was prepared using an organic containing 10% LIX84I in Exxsol D80 at an O/A ratio of 1:1 at 55C. The isotherm is presented in Figure 23.

The pH isotherm indicates nickel is extracted more selectively from cobalt and lithium using LIX84I. At pH 5.0 the nickel extraction is 84% and the cobalt extraction is only 10%. The lithium extraction is <1%. Excellent separation of nickel from lithium is expected in a counter current solvent extraction operation.

### Example 7

A leach piloting campaign was conducted in which 980 kg of feed material was processed continuously over a 116 hour period. The pilot consisted of six (6) agitated leach tanks, operating at atmospheric pressure and 80C. The leach feed was pulped was fed to leach tank 1 (L1) via a gravity feeder and 96% sulphuric acid and water were pumped into Leach tank 1 on fixed flow control to target a percent solids of 12.8% and acid addition rate of 1100 kg/t.

The cobalt, nickel and lithium extraction for the campaign was high, achieving 99.8, 99.5 and 99.5%, respectively. The copper extraction was much lower at 80.9%. This was associated with a low Eh in the circuit during the initial 72 hours of operation. The Eh during this period was consistently <100 mV. During this period the leach residue grade averaged 10.5% Cu and the copper extraction averaged 73%.

From 72 hours until the remainder of the campaign, hydrogen peroxide was added to leach reactor 2 at an average of 63 g/min. This resulted in a significant increase in copper extraction. For the remaining operating period, the copper extraction exceeded 97.5%. A total of 5.8 m3 combined leach liquor, containing 27.4 g/L Co, 4.9 g/L Ni, 8.4 g/L Cu and 4.0 g/L Li, was recovered.

### Example 8

A copper solvent extraction and crystallisation piloting campaign was conducted in which approximately 2000 L of the leach liquor, recovered from the leach pilot, was processed over a 136 hour period. Copper recovery involved solvent extraction of copper from the pregnant leach solution and crystallisation of copper sulphate from the loaded strip liquor. The copper solvent extraction and crystallisation circuits were operated in a closed loop, in which copper crystallisation filtrate was used as strip liquor.

The copper solvent extraction pilot consisted of 3 extraction, 1 wash and 2 stripping stages. Ammonia solution was used as pH in the extraction stages and sulphuric acid was used in the scrub and stripping stages.

The copper concentration of the pregnant leach solution and copper SX raffinate for the campaign duration is presented in Figure 24. The copper extraction averaged 99.6% for the campaign and was consistently >99.5% after 25 hours of operation and for the remainder of the campaign duration. The copper concentration in the raffinate averaged 12 mg/L for this period.

The copper sulphate crystallisation circuit consisted of a loaded strip liquor surge tank, two crystallisation tanks operating at 30°C and a vacuum filter. 96% sulphuric acid is dosed into the first crystallisation tank to target 150 g/L H₂SO₄ in the crystallisation filtrate. The crystallisation tanks were indirectly cooled with chilled water to target 30°C. Slurry from the second crystallisation tank was filtered and washed. The combined filtrate and wash filtrate was stored in the strip feed tanks operating on duty/ standby arrangement. This liquor was pumped into the copper solvent extraction strip circuit.

The average copper concentrations in the copper SX strip feed and loaded strip liquors are 50.0 g/L Cu and 67.1 g/L Cu, respectively. Some 48.6 kg of copper sulfate was produced at an average grade of 27.4% Cu. The main impurity was iron (138 ppm). The recovered copper is relatively consistent to that present in the copper solvent extraction feed liquor.

### Example 9

An iron and aluminium precipitation pilot campaign was conducted in which approximately 1700 L of the copper solvent extraction raffinate, recovered from the CuSX pilot, was processed over a 90 hour period. The circuit involved two stages of precipitation, partial neutralisation (PN) and secondary neutralisation (SN).

The precipitation of iron and aluminium in the PN circuit consistently exceeded 80% for the majority of the campaign. The filtrate contained, on average, 23.8 g/L Co, 4.13 g/L Ni, 2.93 g/L Mn, 1.21 g/L Al and 55 mg/L Fe. The cobalt, manganese and nickel concentrations were lower than the feed, mainly due to dilution. The cobalt and nickel contained in the PN residue is not recovered and accounts for approximately 1.2% of the contained cobalt and 4.0% of the contained nickel. These losses may be minimised by operating at a lower pH in the PN circuit.

The precipitation of iron and aluminium in the SN circuit consistently exceeded 98% for the majority of the campaign. The filtrate contained, on average, 18.1 g/L Co, 2.70 g/L Ni, 2.84 g/L Mn, 17 mg/L Al and <1 mg/L Fe. The SN residue was recovered by batch filtration, washing and drying.

The results indicate significant cobalt and nickel losses to the SN residue of approximately 23% and 35%, respectively. This accounts for the significantly lower cobalt and nickel concentration in the SN filtrate, in comparison to the SN feed. Cobalt and nickel may be recovered from these residues by recycling the residue upstream of the PN circuit or in a standalone leach circuit.

### Example 10

A cobalt solvent extraction campaign was conducted in which approximately 500 L of the precipitation filtrate, recovered from the precipitation pilot, was processed over a 45 hour period. The circuit consisted of four extraction, two scrubbing and two stripping stages. The feed liquor contained 19.9 g/L Co and 2.93 g/L Mn. The raffinate contained 18.3 mg/L Co and 2.93 mg/L Mn, resulting in 99.9% Co and 99.97% Mn extraction for the campaign. The loaded strip liquor contained 84.0 g/L Co, 9.06 g/L Mn and only 22 mg/L Mg and 6 mg/L Ni.

### Example 11

A manganese solvent extraction campaign was conducted in which approximately 120 L of synthetic loaded strip liquor, containing 81 g/l Co and 13 g/l Mn was processed over a 48 hour period. The circuit consisted of four pre-load stages, six extraction stages, three scrub stages and two strip stages. Once equilibrium was established, the extraction raffinate contained 84.7 g/L Co and only 5 mg/L Mn and the loaded strip liquor contained 39.5 g/l Mn and only 24 mg/L Co. These results indicate excellent separation of cobalt from manganese.

### Example 12

A nickel solvent extraction campaign was conducted in which approximately 1000 L of the cobalt SX filtrate, recovered from the cobalt solvent extraction pilot, was processed over a 94 hour period. The circuit consisted of four extraction, two scrubbing and three stripping stages. The feed liquor contained 2.06 g/L Ni, 2.48 g/L Li, 50 mg/L Co and 65 mg/L Mn. The raffinate contained 104 mg/L Ni, 31 mg/L Co, 2.35 g/L Li and 62 mg/L Mg resulting in 95% Ni extraction for the campaign, but consistently achieved >99% for after 24 hours of operation for the duration of the campaign. The loaded strip liquor contained 51.7 g/L Ni and only 1 mg/L Mg, 7 mg/L Co and <2 mg/L Li. The results indicate excellent separation of nickel from cobalt, lithium and magnesium in the liquor.

Those skilled in the art will appreciate that the invention described herein is susceptible to variations and modifications other than those specifically described. The invention includes all such variation and modifications. The invention also includes all of the steps, features, formulations and compounds referred to or indicated in the specification, individually or collectively and any and all combinations or any two or more of the steps or features.

## Claims

1. A method for the recovery of metals from a feed stream containing one or more value metals and lithium, the method comprising:
subjecting the feed stream to a sulphuric acid leach to form a slurry comprising a pregnant leach solution of soluble metal salts and a solid residue;
separating the pregnant leach solution and the solid residue;
subjecting the pregnant leach solution to a precipitation step to remove iron and aluminium, the precipitation step comprising the addition of ammonia to increase the pH of the pregnant leach solution to above 4.5:
subjecting the pregnant leach solution to one or more separate solvent extraction steps, wherein each solvent extraction step recovers one or more value metals from the pregnant leach solution and where each solvent extraction step comprises the dosing of the pregnant leach solution with ammonia to maintain a target pH, the remaining pregnant leach solution comprising lithium
recovery of lithium from the pregnant leach solution; and
following the step of lithium recovery, the leach solution is subjected to an ammonium sulphate recovery step.

2. A method according to claim 1, wherein the feed stream comprises at least lithium and one or more of copper, iron, aluminium, manganese, cobalt and nickel.

3. A method according to claim 1 or 2, wherein the method further comprises the step of:
subjecting the feed stream to a pretreatment process,
prior to the step of subjecting the feed stream to a sulphuric acid leach.

4. A method according to claim 3, wherein the pre-treatment process comprises one or more mechanical treatment steps;
wherein the one or more mechanical treatment steps preferably comprises one or more of: a crushing step and a shredding step.

5. A method according to any one of claims 3 or 4, wherein the pre-treatment process comprises one or more size reduction steps.

6. A method according to any one of claims 3 to 5, wherein the pre-treatment process comprises one or more beneficiation steps;
wherein the one or more beneficiation steps preferably includes one or more of an air classification step, a magnetic classification step and a floatation step.

7. A method according to any one of the preceding claims, wherein the step of subjecting the feed stream to a sulphuric acid leach is conducted at atmospheric pressure.

8. A method according to any one of the preceding claims, wherein the step of subjecting the feed stream to a sulphuric acid leach is conducted at elevated temperature.

9. A method according to any one of the preceding claims, wherein the step of:
subjecting the feed stream to a sulphuric acid leach to form a slurry comprising a pregnant leach solution of soluble metal salts and a solid residue,
more specifically comprises subjecting the feed stream to a sulphuric acid leach in one or more leach reactors.

10. A method according to any one of the preceding claims, wherein each solvent extraction step comprises:
the contact of the pregnant leach solution with an extractant to extract one or more metals to produce a loaded extractant containing the one or more extracted metals;
the separation of the loaded extractant from the pregnant leach solution; and
the recovery of the metal from the loaded extractant.

11. A method according to any one of the preceding claims, wherein one of the separate solvent extraction steps is adapted to recover manganese from the pregnant leach solution.

12. A method according to any one of the preceding claims, wherein one of the separate solvent extraction steps is adapted to recover cobalt from the pregnant leach solution.

13. A method according to any one of claims 1 to 10, wherein one of the separate solvent extraction steps is adapted to simultaneously recover both cobalt and manganese from the pregnant leach solution.

14. A method according to any one of the preceding claims, wherein one of the separate solvent extraction steps is adapted to recover nickel from the pregnant leach solution.

15. A method according to any one of the preceding claims, wherein the separate solvent extraction steps are performed sequentially.

## Patentansprüche

1. Verfahren zur Gewinnung von Metallen aus einem Speisestrom, der ein oder mehrere Wertmetalle und Lithium enthält, wobei das Verfahren Folgendes umfasst:
Aussetzen des Speisestroms einer Schwefelsäurelaugung, um eine Schlacke zu bilden, die eine schwangere Laugungslösung von löslichen Metallsalzen und einen festen Rückstand umfasst;
Trennen der schwangeren Laugungslösung und des festen Rückstands;
Aussetzen der schwangeren Laugungslösung einem Fällungsschritt, um Eisen und Aluminium zu entfernen, wobei der Fällungsschritt die Hinzufügung von Ammoniak umfasst, um den pH der schwangeren Laugungslösung auf über 4,5 zu erhöhen:
Aussetzen der schwangeren Laugungslösung einem oder mehreren separaten Lösungsmittelextraktionsschritten, wobei jeder Lösungsmittelextraktionsschritt ein oder mehrere Wertmetalle aus der schwangeren Laugungslösung gewinnt und wobei jeder Lösungsmittelextraktionsschritt die Dosierung der schwangeren Laugungslösung mit Ammoniak umfasst, um einen Ziel-pH aufrechtzuerhalten, wobei die übrige schwangere Laugungslösung Lithiumgewinnung von Lithium aus der schwangeren Laugungslösung umfasst; und
nach dem Schritt der Lithiumgewinnung die Laugungslösung einem Ammoniumsulfatgewinnungsschritt ausgesetzt wird.

2. Verfahren nach Anspruch 1, wobei der Speisestrom zumindest Lithium und eines oder mehrere von Kupfer, Eisen, Aluminium, Mangan, Kobalt und Nickel umfasst.

3. Verfahren nach Anspruch 1 oder 2, wobei das Verfahren ferner den folgenden Schritt umfasst:
Aussetzen des Speisestroms einem Vorbehandlungsprozess, vor dem Schritt des Aussetzen des Speisestroms einer Schwefelsäurelaugung.

4. Verfahren nach Anspruch 3, wobei der Vorbehandlungsprozess einen oder mehrere mechanische Behandlungsschritte umfasst;
wobei der eine oder die mehreren mechanischen Behandlungsschritte bevorzugt eines oder mehrere von Folgendem umfassen: einem Zerquetschungsschritt und einem Zerkleinerungsschritt.

5. Verfahren nach einem der Ansprüche 3 oder 4, wobei der Vorbehandlungsprozess einen oder mehrere Größenreduzierungsschritte umfasst.

6. Verfahren nach einem der Ansprüche 3 bis 5, wobei der Vorbehandlungsprozess einen oder mehrere Aufbereitungsschritte umfasst;
wobei der eine oder die mehreren Aufbereitungsschritte bevorzugt eines oder mehrere von einem Luftklassifizierungsschritt, einem magnetischen Klassifizierungsschritt und einem Schwimmschritt beinhalten.

7. Verfahren nach einem der vorhergehenden Ansprüche, wobei der Schritt des Aussetzens des Speisestroms einer Schwefelsäurelaugung bei Atmosphärendruck durchgeführt wird.

8. Verfahren nach einem der vorhergehenden Ansprüche, wobei der Schritt des Aussetzens des Speisestroms einer Schwefelsäurelaugung bei erhöhter Temperatur durchgeführt wird.

9. Verfahren nach einem der vorhergehenden Ansprüche, wobei der Schritt des:
Aussetzens des Speisestroms einer Schwefelsäurelaugung, um eine Schlacke zu bilden, die eine schwangere Laugungslösung von löslichen Metallsalzen und einen festen Rückstand umfasst,
spezifischer Aussetzen des Speisestroms einer Schwefelsäurelaugung in einem oder mehreren Laugungsreaktoren umfasst.

10. Verfahren nach einem der vorhergehenden Ansprüche, wobei jeder Lösungsmittelextraktionsschritt Folgendes umfasst:
den Kontakt der schwangeren Laugungslösung mit einem Extraktionsmittel, um ein oder mehrere Metalle zu extrahieren, um ein beladenes Extraktionsmittel zu produzieren, welches das eine oder die mehreren extrahierten Metalle enthält;
die Trennung des beladenen Extraktionsmittels von der schwangeren Laugungslösung; und
die Gewinnung des Metalls aus dem beladenen Extraktionsmittel.

11. Verfahren nach einem der vorhergehenden Ansprüche, wobei einer der separaten Lösungsmittelextraktionsschritte angepasst ist, um Mangan aus der schwangeren Laugungslösung zu gewinnen.

12. Verfahren nach einem der vorhergehenden Ansprüche, wobei einer der separaten Lösungsmittelextraktionsschritte angepasst ist, um Kobalt aus der schwangeren Laugungslösung zu gewinnen.

13. Verfahren nach einem der Ansprüche 1 bis 10, wobei einer der separaten Lösungsmittelextraktionsschritte angepasst ist, um gleichzeitig sowohl Kobalt als auch Mangan aus der schwangeren Laugungslösung zu gewinnen.

14. Verfahren nach einem der vorhergehenden Ansprüche, wobei einer der separaten Lösungsmittelextraktionsschritte angepasst ist, um Nickel aus der schwangeren Laugungslösung zu gewinnen.

15. Verfahren nach einem der vorhergehenden Ansprüche, wobei die separaten Lösungsmittelextraktionsschritte sequentiell durchgeführt werden.

## Revendications

1. Procédé permettant la récupération de métaux à partir d'un flux d'alimentation contenant un ou plusieurs métaux de valeur et du lithium, le procédé comprenant :
la soumission du flux d'alimentation à une lixiviation à l'acide sulfurique pour former une suspension comprenant une solution de lixiviation enrichie de sels métalliques solubles et un résidu solide ;
la séparation de la solution de lixiviation enrichie et du résidu solide ;
la soumission de la solution de lixiviation enrichie à une étape de précipitation pour éliminer le fer et l'aluminium, l'étape de précipitation comprenant l'ajout d'ammoniac pour augmenter le pH de la solution de lixiviation enrichie à plus de 4,5 :
la soumission de la solution de lixiviation enrichie à une ou plusieurs étapes d'extraction par solvant distinctes, dans lequel chaque étape d'extraction par solvant récupère un ou plusieurs métaux de valeur de la solution de lixiviation enrichie et dans lequel chaque étape d'extraction par solvant comprend le dosage de la solution de lixiviation enrichie avec de l'ammoniac pour maintenir un pH cible, la solution de lixiviation enrichie restante comprenant du lithium
la récupération du lithium de la solution de lixiviation enrichie ; et
après l'étape de récupération du lithium, la solution de lixiviation est soumise à une étape de récupération du sulfate d'ammonium.

2. Procédé selon la revendication 1, dans lequel le flux d'alimentation comprend au moins du lithium et un ou plusieurs parmi le cuivre, le fer, l'aluminium, le manganèse, le cobalt et le nickel.

3. Procédé selon la revendication 1 ou 2, dans lequel le procédé comprend en outre l'étape de :
soumission du flux d'alimentation à un processus de prétraitement, avant l'étape de soumission du flux d'alimentation à une lixiviation à l'acide sulfurique.

4. Procédé selon la revendication 3, dans lequel le procédé de prétraitement comprend une ou plusieurs étapes de traitement mécanique ;
dans lequel l'une ou plusieurs étapes de traitement mécanique comprennent de préférence une ou plusieurs parmi : une étape de broyage et une étape de déchiquetage.

5. Procédé selon l'une quelconque des revendications 3 ou 4, dans lequel le procédé de prétraitement comprend une ou plusieurs étapes de réduction de taille.

6. Procédé selon l'une quelconque des revendications 3 à 5, dans lequel le procédé de prétraitement comprend une ou plusieurs étapes de valorisation ;
dans lequel l'une ou plusieurs étapes de valorisation comprennent de préférence une ou plusieurs parmi une étape de classification pneumatique, une étape de classification magnétique et une étape de flottation.

7. Procédé selon l'une quelconque des revendications précédentes, dans lequel l'étape de soumission du flux d'alimentation à une lixiviation à l'acide sulfurique est effectuée à la pression atmosphérique.

8. Procédé selon l'une quelconque des revendications précédentes, dans lequel l'étape de soumission du flux d'alimentation à une lixiviation à l'acide sulfurique est effectuée à une température élevée.

9. Procédé selon l'une quelconque des revendications précédentes, dans lequel l'étape de :
soumission du flux d'alimentation à une lixiviation à l'acide sulfurique pour former une suspension comprenant une solution de lixiviation enrichie de sels métalliques solubles et un résidu solide,
comprend plus spécifiquement la soumission du flux d'alimentation à une lixiviation à l'acide sulfurique dans un ou plusieurs réacteurs de lixiviation.

10. Procédé selon l'une quelconque des revendications précédentes, dans lequel chaque étape d'extraction par solvant comprend :
la mise en contact de la solution de lixiviation enrichie avec un extractant pour extraire un ou plusieurs métaux afin de produire un extractant chargé contenant l'un ou plusieurs métaux extraits ;
la séparation de l'extractant chargé de la solution de lixiviation enrichie ; et
la récupération du métal à partir de l'extractant chargé.

11. Procédé selon l'une quelconque des revendications précédentes, dans lequel l'une des étapes d'extraction par solvant distinctes est adaptée pour récupérer le manganèse à partir de la solution de lixiviation enrichie.

12. Procédé selon l'une quelconque des revendications précédentes, dans lequel l'une des étapes d'extraction par solvant distinctes est adaptée pour récupérer le cobalt à partir de la solution de lixiviation enrichie.

13. Procédé selon l'une quelconque des revendications 1 à 10, dans lequel l'une des étapes d'extraction par solvant distinctes est adaptée pour récupérer simultanément à la fois le cobalt et le manganèse à partir de la solution de lixiviation enrichie.

14. Procédé selon l'une quelconque des revendications précédentes, dans lequel l'une des étapes d'extraction par solvant distinctes est adaptée pour récupérer le nickel à partir de la solution de lixiviation enrichie.

15. Procédé selon l'une quelconque des revendications précédentes, dans lequel les étapes d'extraction par solvant distinctes sont effectuées séquentiellement.
